# FASCICULE DE BREVET EUROPEEN

(11) **EP 3 766 549 B1**
(45) Date de publication et mention de la délivrance du brevet: **10.09.2025**
(21) Numéro de dépôt: 20185089.8
(22) Date de dépôt: 09.07.2020
(51) Int. Cl.: A63C 5/06

(54) **SYSTÈME D'ANALYSE DES PERFORMANCES D'UTILISATION D'UNE PLANCHE DE GLISSE**
SYSTEM ZUR ANALYSE DER LEISTUNGEN BEI DER VERWENDUNG EINES GLEITBRETTS
SYSTEM FOR ANALYSING PERFORMANCE IN THE USE OF A GLIDEBOARD

(30) Priorité: 18.07.2019 FR 1908134
(43) Date de publication de la demande: 20.01.2021
(73) Titulaire: Skis Rossignol, 38430 Saint Jean de Moirans (FR); COMMISSARIAT À L'ÉNERGIE ATOMIQUE ET AUX ÉNERGIES ALTERNATIVES, 75015 Paris (FR)
(72) Inventeur: PUGET, Nicolas, 73470 NOVALAISE (FR); BAILLY, Romain, 38500 COUBLEVIE (FR); VAILLI, Johan, 38500 COUBLEVIE (FR); ZUCCO, Aurélie, 26120 MONTELIER (FR); BOUTET, Jérôme, 38054 GRENOBLE CEDEX 09 (FR); GROS, Jean-Philippe, 38054 GRENOBLE CEDEX 09 (FR); GALLARDO, Maxime, 38054 GRENOBLE CEDEX 09 (FR); PARENT, Gaël, 38054 GRENOBLE CEDEX 09 (FR)
(74) Mandataire: Ipsilon Lyon

(56) Documents cités:
- EP-A1- 3 513 846
- WO-A1-2018/170119
- US-A1- 2002 116 147
- US-A1- 2015 057 112

## Description

### Domaine Technique

L'invention se rattache au domaine des planches de glisse sur neige ou sur eau, et en particulier les skis alpins, de fond ou de randonnée, ou encore les snowboards ou les wakeboards.

L'invention concerne plus particulièrement un système d'analyse des performances d'utilisation d'une planche de glisse, c'est-à-dire un système capable d'indiquer à un utilisateur d'une planche de glisse s'il répond à des critères de performances objectifs.

### Techniques antérieures

Il existe un grand nombre de dispositifs permettant d'estimer les performances d'un utilisateur d'une planche de glisse. Par exemple, la demande de brevet français FR 2 891 998 propose d'utiliser un capteur de position, intégré dans un vêtement de ski, pour caractériser les performances d'un skieur en fonction de la vitesse de déplacement du skieur.

En outre, plusieurs applications mobiles se sont développées ces dernières années pour mesurer et comparer les performances de différents skieurs d'une station de ski. Ces applications utilisent le capteur inertiel ou le gyroscope du mobile pour estimer la vitesse du skieur. Une base de données centralisée regroupe les performances des différents skieurs et permet à une application mobile d'un skieur de comparer les performances mesurées avec des performances d'autres skieurs.

Cependant, il ne suffit pas de mesurer la vitesse d'un skieur pour caractériser ses performances. En effet, au sens de l'invention, les « performances » d'un skieur reflètent non seulement la vitesse mais également la technique du skieur.

Pour estimer la technique d'un skieur, il existe le produit PIQ de la demanderesse.

Ce produit PIQ correspond à un capteur monté sur une chaussure de ski et configuré pour mesurer la puissance appliquée par le skieur à chaque virage. Le capteur communique avec un téléphone intelligent du skieur de sorte à mesurer un grand nombre de paramètres lors de la descente du skieur en associant les mesures issues des capteurs du téléphone avec celles du capteur PIQ. L'application mobile fournie avec le produit PIQ permet de comparer les performances de plusieurs skieurs en transmettant leurs performances sur une base de données.

Cependant, le capteur PIQ est particulièrement énergivore car il doit alimenter, tout au long d'une journée de ski, les moyens de mesure de la puissance et les moyens de communication sans fil avec le téléphone intelligent. Pour ce faire, le capteur PIQ intègre une batterie et il est fourni avec un module de recharge de cette batterie. Ainsi, il n'est pas possible d'intégrer de manière durable le capteur PIQ dans une chaussure ou dans un ski car l'utilisateur à la charge contraignante d'assurer la recharge régulière du capteur PIQ.

Par ailleurs, il est connu du brevet américain US 5 590 908 de mesurer les déformations d'une planche de glisse au moyen d'un capteur piézoélectrique afin d'obtenir une information sur les points de contact de la planche de glisse sur la neige.

Il est également connu du brevet EP 0 841 969 d'utiliser des capteurs piézoélectriques pour amortir les vibrations d'une planche de glisse.

Ce type de capteur utilise le comportement intrinsèque d'un élément piézoélectrique qui convertit une énergie mécanique de déformation en énergie électrique. Le document US 2002/116147 A divulgue un système d'analyse des performances d'utilisation d'une planche de glisse selon le préambule de la revendication 1. Les documents WO 2018/170119 Al ou US 2015/057112 A1 divulguent un piézoélectrique comme source d'énergie pour un circuit électronique de traitement dans un ski.

Pour analyser les déformations d'une planche de glisse à l'aide d'un capteur piézoélectrique, il serait nécessaire d'utiliser un circuit électronique d'analyse qui est alimenté en permanence.

Ainsi, l'utilisation d'une source d'énergie électrique fournissant une tension constante, telle qu'une batterie électrochimique ou tout autre moyen connu, est nécessaire.

Cependant, une batterie électrochimique présente des contraintes d'encombrement et de poids, de résistance au froid et de stockage, qui ne sont généralement pas compatibles avec une planche de glisse. En effet, une planche de glisse sur neige peut être utilisée à des températures proches de -20°C. Dans cette plage de température de fonctionnement, les batteries électrochimiques classiques sont peu performantes, voire non utilisables. De plus, les batteries se déchargent rapidement au froid et les batteries doivent être souvent remplacées ou rechargées par l'utilisateur, ce qui est très contraignant. En outre, une planche de glisse sur neige est souvent utilisée de manière ponctuelle, par exemple quelques jours chaque hiver.

Une batterie électrochimique embarquée sur une planche de glisse sur neige présenterait donc des grandes périodes d'inactivité, au moins entre le printemps et l'automne, au cours desquelles la batterie électrochimique serait complètement déchargée. Par ailleurs, une planche de glisse est un élément mécanique subissant des contraintes importantes, telles que des torsions ou des chocs.

Les applications concrètes impliquant l'utilisation d'un circuit électronique et d'un élément piézoélectrique embarqués sur une planche de glisse sont donc limitées et la grande majorité des dispositifs de mesures existants dans d'autres domaines d'application ne sont pas transposables sur une planche de glisse en raison de ces contraintes spécifiques.

Le document WO 2011/160040 décrit une planche de *skateboard* avec des diodes électroluminescentes disposées sous la planche pour afficher des effets lumineux sur le sol.

L'alimentation des diodes est normalement réalisée par une batterie mais un mode de réalisation propose d'utiliser un transducteur piézoélectrique pour alimenter ces diodes électroluminescentes. Outre ce dispositif d'affichage, ce document propose également d'incorporer un circuit électronique sur la planche de *skateboard* afin de réaliser des mesures au cours du temps. Ce circuit électronique est alimenté par une batterie et peut intégrer un capteur de mouvement tel que décrit précédemment, c'est-à-dire un capteur piézoélectrique utilisant une mesure de déformation issue d'un élément piézoélectrique.

Cependant, l'enseignement de ce document n'est pas adapté au domaine des planches de glisse correspondant à l'invention, c'est-à-dire les planches de glisse sur neige ou sur eau, et en particulier les skis alpins, de fond ou de randonnée, ou encore les snowboards ou les wakeboards. En effet, pour ces planches de glisse, la face inférieure des planches de glisse est destinée à venir au contact de la surface sur laquelle la planche évolue contrairement à un *skateboard.* Il n'est donc pas utile de disposer des éléments lumineux sous la planche de glisse de l'invention car ces éléments ne seraient pas visibles. En outre, ce document ne décrit qu'une méthode classique d'alimentation du circuit électronique réalisant les mesures, c'est-à-dire l'utilisation d'une batterie.

Le problème technique que propose de résoudre de l'invention est donc de trouver comment analyser les performances d'un utilisateur d'une planche de glisse en obtenant une information liée à l'utilisation d'une planche de glisse tout en s'affranchissant d'une source supplémentaire d'alimentation, et en particulier d'une batterie électrochimique.

### Exposé de l'invention

L'invention propose de répondre à ce problème technique en utilisant un capteur comportant au moins un élément piézoélectrique solidarisé à une planche de glisse et en utilisant cet élément piézoélectrique pour alimenter un circuit électronique de traitement du capteur permettant d'estimer une durée des phases de déformations de la planche de glisse et une image de l'énergie mécanique dissipée pendant les déformations de ladite planche de glisse.

A cet effet, l'invention concerne un système d'analyse des performances d'utilisation d'une planche de glisse comportant :
- une base de données stockant des performances de référence ;
- un capteur sensible aux déformations de ladite planche de glisse ; et
- un organe de supervision comportant :
   - des moyens de détermination des performances d'utilisation de ladite planche de glisse en fonction de mesures dudit capteur ; et
   - des moyens de comparaison desdites performances d'utilisation avec lesdites performances de référence.

L'invention se caractérise en ce que ledit capteur est solidarisé à ladite planche de glisse et comporte :
- au moins un élément piézoélectrique solidarisé à ladite planche de glisse et configuré pour générer une énergie électrique lors des déformations de ladite planche de glisse ; et
- un circuit électronique de traitement, alimenté exclusivement par ladite énergie électrique générée par ledit au moins un élément piézoélectrique, configuré pour estimer une durée des phases de déformations de ladite planche de glisse et pour estimer une image de l'énergie mécanique dissipée pendant les déformations de ladite planche de glisse ;

lesdites performances d'utilisation incluant un temps de sollicitations, correspondant à ladite durée des phases de déformations de ladite planche de glisse, et une image de la puissance moyenne de sollicitations correspondant au rapport entre l'image par ladite durée des phases de déformations ;
lesdites performances de référence étant déterminées par un capteur, analogue audit capteur solidarisé à ladite planche de glisse, de sorte à obtenir un temps de sollicitations de référence et une moyenne de sollicitations de référence.

L'invention permet, ainsi, d'obtenir deux informations, le temps de sollicitation et la puissance moyenne de sollicitation, liées à l'utilisation d'une planche de glisse, tout en s'affranchissant d'une source supplémentaire d'alimentation, et en particulier d'une batterie électrochimique.

Un utilisateur d'une planche de glisse peut remettre à zéro ces informations avant une descente et récupérer les informations acquises à la suite de la descente. De préférence, l'utilisateur possède une application mobile et un téléphone intelligent configurés pour fonctionner avec le capteur solidaire de la planche de glisse. Tout autre appareil similaire à un téléphone intelligent pourrait être utilisé en remplacement de ce téléphone intelligent, comme par exemple une montre connectée, ou un objet connecté positionné ou intégré à un vêtement. Par exemple, le capteur peut intégrer une antenne radiofréquence destinée à coopérer avec une antenne du téléphone intelligent par le biais du protocole NFC, pour « Near Field Communication ». Selon un mode de réalisation, ledit organe de supervision est intégré dans une application mobile d'un téléphone intelligent.

Cette technologie permet d'utiliser la puissance électromagnétique du signal radiofréquence émis par le téléphone intelligent pour alimenter le capteur et écrire ou récupérer des informations contenues dans une puce.

En outre, ces informations peuvent être corrélées avec d'autres informations acquises par le téléphone intelligent ou un appareil similaire qui inclut d'autres types de capteurs, indépendants du capteur solidaire de la planche de glisse.

Selon un mode de réalisation, lesdites performances d'utilisation incluent une vitesse mesurée par un capteur de position ; cette vitesse mesurée étant comparée à une vitesse de référence. Un Capteur de position peut correspondre à un capteur de type GPS, pour « Global Positioning System ».

Selon un mode de réalisation, lesdites performances d'utilisation incluent un nombre de virages effectués détectés par un gyroscope ; ce nombre de virages effectués étant comparé à un nombre de virages effectués de référence. En variante ou en complément, le nombre de virages peut être déterminer par d'autres composants d'un téléphone intelligent, tels qu'un accéléromètre ou qu'un magnétomètre.

Ainsi, en utilisant le capteur de position et le gyroscope du téléphone intelligent, il est possible de comparer le temps de sollicitations, la puissance moyenne de sollicitations, la vitesse et le nombre de virages effectués par un utilisateur d'une planche de glisse par rapport à un autre utilisateur de référence dont les performances sont stockées dans une base de données.

De préférence, l'utilisateur de référence correspond à un professionnel ou à un skieur expert qui emprunte un parcours prédéterminé avec un niveau de maîtrise recherché. Par exemple, pour déterminer si un skieur descend correctement une piste verte avec la technique du chasse-neige, il n'est pas suffisant d'analyser la vitesse de descente ou le nombre de virage car un utilisateur peut descendre une piste très rapidement sans maîtriser les virages ou il peut faire un grand nombre de virages sans maîtriser la puissance d'appui dans chaque virage pour garantir sa stabilité.

Pour détecter ces manques de maîtrise, un professionnel équipé de l'invention emprunte la piste verte avant le skieur en pratiquant le chasse-neige et en descendant la piste doucement avec des virages correctement appuyés.

Suite à la descente du professionnel, les performances du professionnel sont envoyées sur la base de données, via son téléphone intelligent et l'application mobile formant l'organe de supervision. Pour ce faire, l'application mobile comporte préférentiellement des moyens de traitement des données pour former les performances de référence.

Suite à cette phase d'enregistrement des performances de référence, un utilisateur équipé de l'invention peut emprunter la même piste et l'organe de supervision peut comparer ses performances avec celles de l'utilisateur de référence.

De préférence, ledit organe de supervision est configuré pour autoriser l'accès à un parcours de niveau supérieur lorsque ledit temps de sollicitations est inférieur à un temps de sollicitations de référence et que ladite puissance moyenne de sollicitations est supérieure à une puissance moyenne de sollicitations de référence. Avec ce mode de réalisation, la comparaison du skieur et du professionnel de référence permet d'indiquer au skieur son niveau de ski, de lui conseiller de continuer à pratiquer sur la piste déjà effectuée ou de lui indiquer qu'il peut skier sur une piste plus difficile. Cette comparaison peut permettre aussi d'autoriser automatiquement l'accès à certaines pistes d'un domaine de sorte que les utilisateurs d'une piste présentent de façon certaine les compétences nécessaires pour emprunter la piste.

Dans cet optique, l'organe de supervision peut être installé à l'entrée d'un portique d'accès à un remonte-pente au lieu d'être porté sur un téléphone intelligent de l'utilisateur de la planche de glisse. Avant de pouvoir accéder à un remonte-pente menant à une piste d'une difficulté particulière, par exemple une piste noire, l'utilisateur doit alors passer son ski devant le lecteur de sorte que le lecteur récupère les informations de performance liées à une descente précédente d'un niveau inférieure, par exemple une piste rouge.

Si l'utilisateur présente les qualités requises, c'est-à-dire qu'il dépasse les critères imposés par les performances de référence, au moins en termes de temps de descente et de puissance moyenne de sollicitation, il pourra effectivement accéder à la piste noire.

En outre, un forfait du skieur peut être automatique mis à jour en inscrivant les droits d'accès dans un tag radiofréquence pour autoriser les prochaines demandes d'accès à ce niveau de difficulté. Au contraire, si l'utilisateur ne dépasse pas les critères imposés, l'accès à la piste peut lui être refusé.

Bien entendu, ce mode de réalisation peut également être mis en œuvre avec un plus grand nombre de critères. Par exemple, dans un mode de réalisation, ledit organe de supervision est configuré pour autoriser l'accès à un parcours de niveau supérieur lorsque ladite vitesse et ledit nombre de virages effectués sont supérieurs à ladite vitesse de référence et audit nombre de virages effectués de référence.

L'invention permet également beaucoup d'autres nouveaux usages. Par exemple, dans un mode de réalisation, ledit organe de supervision est configuré pour classer un utilisateur d'une planche de glisse par rapport à des classes de niveau prédéfinies en fonction de ladite comparaison réalisée par ledit organe de supervision. Ce mode de réalisation permet de délivrer un classement d'un skieur dans des catégories reconnues, telles que les classes 1, 2, 3 et 4, comme établies par l'Ecole du Ski Français par exemple. Dans ce cas, la classe 1 correspond au niveau débutant, tandis que la classe 4 correspond au niveau compétition.

Il est également possible de comparer des utilisateurs entre eux dans un environnement vidéoludique dans lequel les joueurs s'affrontent en utilisant leurs performances réelles.

Cependant, les deux utilisateurs peuvent présenter des différences de matériels et les capacités de la planche de glisse, et en particulier ses capacités en flexion, peuvent faire varier les performances captées par deux capteurs identiques montés sur deux planches de glisse distinctes. Pour résoudre ce problème, une solution consiste à comparer des performances d'utilisation corrigées en fonction d'une variable relative à une raideur en flexion particulière à chaque planche de glisse

A cet effet, selon un mode de réalisation, lesdits moyens de détermination des performances d'utilisation sont configurés pour déterminer des performances d'utilisation corrigées en fonction desdites performances d'utilisation et d'une variable relative à une raideur en flexion de ladite planche de glisse ; lesdits moyens de comparaison étant mis en œuvre à partir desdites performances d'utilisation corrigées.

Par exemple, ladite variable relative à une capacité de déformation de ladite planche de glisse, peut être obtenue à partir du modèle de ladite planche de glisse et d'une base de données stockant différents modèles de planches de glisse et des coefficients de raideur en flexion correspondants. Le modèle de la planche de glisse peut être renseigné directement dans l'application mobile d'un téléphone intelligent ou un appareil similaire. En variante, ce modèle peut être capté par le téléphone intelligent en scannant un tag disposé sur la planche de glisse dans lequel le nom du modèle ou une référence au modèle est stocké.

En outre, les variations de flexion de la planche de glisse peuvent également apparaitre en raison de la taille de la chaussure de l'utilisateur car, pour une même planche de glisse, la longueur de la poutre libre en flexion varie entre deux tailles de chaussures. Ainsi, la variable relative à une capacité de déformation de ladite planche de glisse peut également être déterminée en fonction d'une pointure renseignée dans l'application mobile d'un téléphone intelligent.

Cette variable relative à la taille de la chaussure peut également permettre de corriger les performances d'utilisation enregistrées par l'utilisateur.

D'autres variations apparaissent en raison des variations du support sur lequel évolue les deux utilisateurs.

En effet, entre deux périodes de l'année et entre deux instants différents d'une même journée, la neige change de texture et les informations obtenues par le capteur de l'invention peuvent être bien différentes pour un même utilisateur.

Pour répondre à ce problème, lesdits moyens de détermination des performances d'utilisation sont configurés pour déterminer des performances d'utilisation corrigées en fonction desdites performances d'utilisation et d'une variable relative au type de neige sur laquelle évolue ladite planche de glisse ; lesdits moyens de comparaison étant mis en œuvre à partir desdites performances d'utilisation corrigées.

Par exemple, ladite variable relative au type de neige sur laquelle évolue ladite planche de glisse, est obtenu à partir d'un capteur de température. De préférence, le capteur de température est intégré dans un téléphone intelligent.

En variante, ladite variable relative au type de neige sur laquelle évolue ladite planche de glisse, est obtenu à partir d'un capteur de position et d'une base de données stockant des informations météorologiques relatives à différentes positions.

### Description sommaire des figures

La manière de réaliser l'invention, ainsi que les avantages qui en découlent, ressortiront bien de la description des modes de réalisation qui suivent, à l'appui des figures annexées dans lesquelles :
[Fig 1] la figure 1 est une représentation schématique d'un système d'analyse des performances d'utilisation d'une planche de glisse selon un mode de réalisation de l'invention ;
[Fig 2] la figure 2 est un ordinogramme des étapes d'enregistrement et de comparaison des performances d'utilisation acquises avec le système d'analyse de la figure 1 ;
[Fig 3] la figure 3 est un schéma électrique d'un capteur monté sur la planche de glisse de la figure 1 selon un premier mode de réalisation ;
[Fig 4] la figure 4 est un schéma électrique d'un capteur monté sur la planche de glisse de la figure 1 selon un second mode de réalisation ;
[Fig 5] les figures 5a à 5e sont des représentations temporelles d'acquisition de différents paramètres, réalisées à l'aide du capteur de la figure 3, sur lesquelles la figure 5a représente les déformations de la planche de glisse (D), la figure 5b représente la tension aux bornes de l'élément de stockage capacitif, la figure 5c représente une durée **(T)** des phases de déformation, et les figures 5d et 5e représentent une image **(M)** de la puissance moyenne des phases de déformation enregistrée dans une mémoire tampon et dans la mémoire non volatile;
[Fig 6] les figures 6a à 6e sont des représentations temporelles d'acquisition de différents paramètres, réalisées à l'aide du capteur de la figure 4, sur lesquelles la figure 6a représente les déformations de la planche de glisse **(D),** la figure 6b représente la tension aux bornes de l'élément de stockage capacitif, la figure 6c représente une durée **(T)** des phases de déformation, et les figures 6d et 6e représentent une image **(M)** de la puissance moyenne des phases de déformation enregistrée dans une mémoire tampon et dans la mémoire non volatile;
[Fig 7] la figure 7 est une vue de dessus d'une planche de glisse conforme à l'invention ;
[Fig 8] la figure 8 est une vue de côté de la partie avant de la planche de glisse de la figure 7 ;
[Fig 9] la figure 9 est une vue en perspective éclatée des éléments avant rapportées sur la planche de glisse de la figure 7 ;
[Fig 10] la figure 10 est une vue partielle de dessus de la planche de glisse de la figure 7 dans une première position de montage du capteur ;
[Fig 11] la figure 11 est une vue partielle de dessus de la planche de glisse de la figure 7 dans une second position de montage du capteur ;
[Fig 12] la figure 12 est une vue partielle de dessus de la planche de glisse de la figure 7 dans une troisième position de montage du capteur ;
[Fig 13] la figure 13 est une vue partielle de dessus de la planche de glisse de la figure 7 dans une quatrième position de montage du capteur ;
[Fig 14] la figure 14 est une vue en coupe verticale de la planche de glisse de la figure 7 selon un premier mode de réalisation de l'invention ; et
[Fig 15] la figure 15 est une vue en coupe verticale de la planche de glisse de la figure 7 selon un second mode de réalisation de l'invention.

Bien entendu, les dimensions et les proportions de certains éléments constitutifs de l'invention ont pu être déformées, exagérées et s'écarter de la réalité, dans le but de bien faire comprendre l'invention.

### Manière de réaliser l'invention

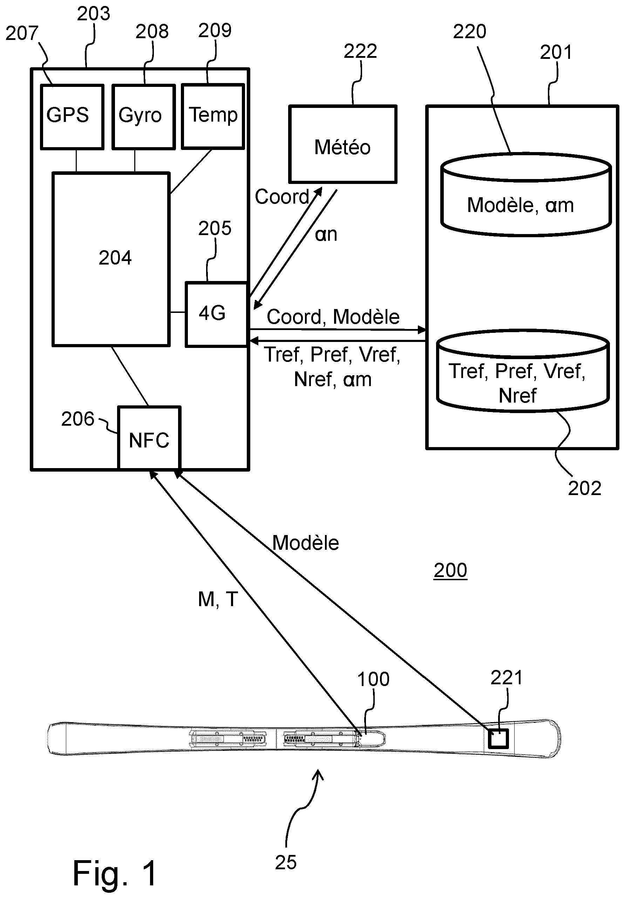

La figure 1 illustre un système d'analyse **200** des performances d'utilisation d'une planche de glisse **25.** Dans la suite de la description, la planche de glisse **25** correspond à un ski.

Bien entendu, d'autres planches de glisse peuvent être utilisée sans changer l'invention, en particulier telles que des skis de fond ou des snowboards recevant les deux pieds de l'utilisateur sur la même planche.

La planche de glisse **25** est instrumentée par un capteur **100** et un système de transmission sans fil, qui peut être un tag radiofréquence **221** ou un système Bluetooth. Le skieur porte sur lui un téléphone intelligent **203** capable de communiquer avec le capteur **100** et le tag **221** par radiofréquences. Par exemple, le téléphone intelligent **203** peut comporter une puce NFC **206,** pour « Near Field Communication », permettant d'utiliser les ondes électromagnétiques pour alimenter le capteur **100** ou le tag **221** et recevoir une information contenue dans une puce interne **19** au capteur **100** ou au tag **221.** Dans le cas de l'utilisation d'un système Bluetooth au niveau du capteur, ce système Bluetooth est alimenté par l'élément piezoélectrique positionné sur la planche de glisse.

Le tag **221** vise uniquement à transmettre une information sur le modèle de la planche de glisse **25** alors que le capteur **100** permet de transmettre une information relative aux déformations subies par la planche de glisse **25** lors d'une descente.

La puce NFC **206** du téléphone intelligent **203** est connectée sur un organe de supervision **204.** Par exemple, l'organe de supervision **204** peut correspondre à une application mobile fonctionnant sur un processeur intégré dans le téléphone intelligent **203.** Cet organe de supervision peut également comprendre des fonctions déportées et traitées sur un serveur distant.

Cet organe de supervision **204** est également connecté à d'autres puces du téléphone intelligent, tel qu'une puce GPS **207,** pour « Global Positioning System », permettant de déterminer la position et la trajectoire du téléphone intelligent **203** au cours du temps, ou une puce gyroscopique **208,** permettant d'indiquer les déplacements angulaires du téléphone intelligent **203** pour repérer les virages ou encore un capteur de température **209,** permettant de capter la température extérieure autour du téléphone intelligent **203.**

D'autres capteurs, comme un accéléromètre, un magnétomètre, un baromètre, voire même une caméra, pourraient être également connectés à cet organe de supervision pour réaliser des analyses plus complètes.

L'organe de supervision **204** a pour fonction principale de comparer les performances acquises lors d'une descente du skieur avec des performances de référence stockées dans une base de données **202.** Cette base de données **202** peut être hébergée sur un serveur **201** d'un fabricant de matériel de sports d'hiver ou dans une station de ski. Pour communiquer avec le serveur **201,** le téléphone intelligent **203** utilise préférentiellement un réseau de transmission de données sans fil, tel que les réseaux WiFi, 3G, 4G ou 5G. Dans l'exemple de la figure 1, le téléphone intelligent **203** utilise une puce 4G **205** pour communiquer avec le serveur **201.**

En outre, le téléphone intelligent **203** est également connecté avec un serveur météorologique **222** de sorte que le téléphone intelligent **203** puisse obtenir une information sur la météo en fonction de la position du skieur **Coord** transmise au serveur météorologique **222.** Cette position du skieur **Coord** est préférentiellement obtenue par la puce GPS **207.**

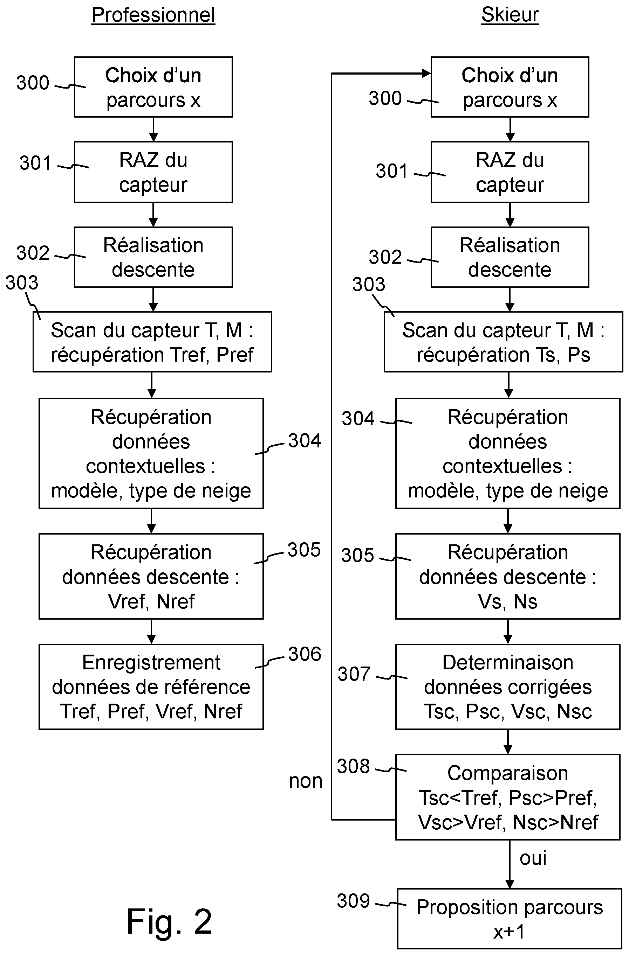

Ce système d'analyse **200** permet de comparer les performances du skieur avec celles d'un skieur de référence. Pour ce faire, tel qu'illustré sur la figure 2, un même parcours X va être effectué par un skieur de référence, qui peut être un professionnel, et également par le skieur, à un autre moment par rapport au skieur de référence. Avant d'effectuer le parcours X, il est nécessaire de remettre à zéro les données du capteur **100** positionné sur le ski, aussi bien pour le skieur de référence que pour le skieur. Plus précisément, cette remise à zéro est effectuée en taguant le capteur **100** avec le téléphone intelligent **203.** Ensuite, le début de l'enregistrement des données dans le capteur **100** est automatique dès que le skieur de référence ou le skieur débute son parcours X étant donné que le capteur **100** n'enregistre les données uniquement lorsque le ski se déforme en statique et/ou en dynamique.

Dans une première étape **300,** le skieur de référence ou le professionnel choisit un parcours X. Avant de débuter le parcours X, dans une étape **301,** le professionnel remet à zéro le capteur **100.** Pour ce faire, le professionnel peut utiliser son téléphone intelligent **203** pour communiquer avec une mémoire non volatile **19** intégrée dans le capteur **100** de sorte à remettre à zéro une information sur une durée **T** des phases de déformation de sa planche de glisse **25** et une information d'une image **M** de l'énergie mécanique dissipée pendant les déformations de la planche de glisse **25.** Lorsque ces informations **T, M** sont remises à zéro, le professionnel peut réaliser la descente du parcours X, dans une étape **302.** Lors de la descente, le professionnel doit veiller à descendre le parcours X en appuyant dans les virages avec un niveau adapté au niveau du parcours X, de sorte à obtenir des trajectoires adaptées, des forces d'appuis moyennes sur les skis et par conséquent, un temps d'utilisation ou de réalisation du parcours X ainsi qu'une puissance moyenne représentatifs du niveau correspondant au parcours X.

À l'arrivée du parcours X, dans une étape **303,** le professionnel scanne le capteur **100** au moyen du téléphone intelligent **203** de sorte à récupérer les données **T** et **M** estimées par le capteur **100** et l'organe de supervision **204** détermine les deux informations **Tref** et **Pref** à partir de ces données **T** et **M.** Dans le cas d'utilisation d'un système Bluetooth sur la planche de glisse, les données **T** et **M** sont transmises automatiquement à l'organe de supervision **204.**

La durée **Tref** correspond directement à un compte temporel **T** obtenue par le capteur **100** alors que l'image **Pref** de la puissance moyenne de sollicitations est déterminée par le rapport entre un compte d'activation **M** et le compte temporel **T** des phases de sollicitations estimées par la capteur **100.**

Outre ces informations **T** et **M,** une étape **304** peut également être mise en œuvre pour récupérer des données contextuelles, telles que le modèle des skis du professionnel ou le type de neige sur laquelle le professionnel a réalisé la descente du parcours X.

Le parcours X peut faire partie d'un parc de pistes imposées, chacune des pistes représentant un niveau de ski avec des exercices spécifiques correspondant à ce niveau, la piste étant généralement équipée de piquets formant un tracé spécifique, permettant d'imposer le type de virages à effectuer.

Le parcours X peut également correspondre à une piste libre, c'est-à-dire à une piste quelconque située dans la station de ski et non équipée de piquets, la piste étant cependant référencée par sa pente, et en particulier de façon connue par des couleurs verte, bleu rouge et noir, allant de la pente la moins élevée correspondant à une piste la moins technique, à la pente la plus élevée, correspondant à la piste la plus technique. Quant aux exercices proposés sur piste libre, ils peuvent comprendre des virages serrés ou plus larges, des lignes droites ou traversées, ou des exercices du type pas de patineur, ou tout autre type d'exercice important dans l'apprentissage du ski.

Pour détecter le modèle, le professionnel peut simplement scanner le tag **221** présent sur la planche de glisse **25** dans lequel l'information sur le modèle est présente. En variante, il peut renseigner ce modèle sur une application mobile du téléphone intelligent **203.**

En ce qui concerne le type de neige, elle peut être caractérisée en fonction des informations météorologiques transmises par le serveur **221** en fonction des coordonnées **Coord** du professionnel ou elles peuvent être déterminées en fonction de la température mesurée par le capteur de température **209.** Outre ces données contextuelles, l'étape **305** propose éventuellement de récupérer également des données collectées lors de la descente par le professionnel au moyen de capteurs intégrés dans le téléphone intelligent **203.** Par exemple, cette étape **305** peut récupérer une vitesse **Vs** mesurée par le capteur de position **207** ou un nombre de virages **Ns** effectués et détectés par le gyroscope **208.** Bien entendu, bien d'autre capteurs du téléphone intelligent **203** peuvent être mis en œuvre, tels qu'un accéléromètre, un magnétomètre, un baromètre ou encore une caméra intégrée au téléphone intelligent **203.**

En variante et en complément, des données peuvent également être captées lors de la descente par des autres dispositifs connectés au téléphone intelligent **203,** tels qu'une montre connectée, un capteur intégré dans les vêtements du professionnel ou une caméra embarquée sur le professionnel dans une zone proche de son centre de gravité.

Typiquement, un accéléromètre permet d'obtenir une information sur la poussée subie par le professionnel dans les virages, un magnétomètre utilisé en tant qu'une boussole permet de détecter les variations de cap du professionnel, un baromètre permet de détecter de façon précise les dénivellations subies par le professionnel et une caméra permet d'enregistrer une image des skis du professionnel tout au long de la descente pour évaluer la capacité du skieur à maintenir ses skis parallèles en particulier.

Dans une étape **306,** l'ensemble de ces données sont enregistrées dans la base de données **202** pour former des performances de référence **(Tref, Pref, Vref, Nref...)** du parcours X, fournies par le skieur de référence.

Ainsi, lorsqu'un skieur utilise un système **200** analogue, il peut reproduire les mêmes étapes **300** à **305** et obtenir des performances comparables à celles du professionnel pour le même parcours X. Si le parcours X correspond à une piste libre, l'application mobile indique au skieur le niveau de la piste à descendre (vert, bleu, rouge, noir) ainsi que l'exercice à réaliser. Si le parcours X est tracé sur une piste imposée, l'exercice à réaliser est en lien avec la piste.

Pour comparer efficacement les performances du skieur avec celles du professionnel, il est préférable de corriger les performances du skieur **Ts, Ps, Vs, Ns,** en fonction des disparités entre les données contextuelles du professionnel et celles du skieur.

Pour ce faire, la différence de raideur en flexion entre le modèle de ski du professionnel et le modèle de ski du skieur est déterminée à partir d'une base de données **220,** hébergée sur le serveur **201** ou sur un serveur externe. Cette base de données **220** intègre des correspondances entre des modèles de ski et des coefficients de raideur. La différence entre les deux coefficients de raideur des deux modèles de ski permet d'obtenir une variable **αm** relative à une raideur en flexion des skis du skieur. Cette variable **αm** peut également être déterminée en fonction d'une différence de pointure entre le professionnel et le skieur.

Les performances du skieur **Ts, Ps, Vs, Ns** peuvent également être corrigées par une variable **αn** relative à la différence entre la dureté de la neige du professionnel et la dureté de la neige du skieur.

Pour déterminer cette variable **αn**, l'organe de supervision **204** peut interroger le serveur météorologique **222** pour obtenir une estimation de la dureté de la neige en fonction de la position du skieur.

En variante, la dureté de la neige peut être déterminée à partir d'une mesure d'un capteur de température **209,** en particulier intégré au téléphone intelligent.

Avec ces différentes corrections possibles, l'étape **307** permet d'obtenir des performances corrigées **Tsc, Psc, Vsc, Nsc** permettant une meilleure comparaison avec les performances de références **Tref, Pref, Vref, Nref** acquises par le professionnel. Ainsi, dans une étape **308,** la comparaison est réalisée pour l'ensemble des performances mesurées et comparables.

Le résultat de cette comparaison peut être exploité de différentes manières sans changer l'invention. Par exemple, tel qu'illustré sur la figure 2, si la comparaison montre que le skieur a dépassé les performances **Tref, Pref, Vref, Nref** du professionnel, c'est-à-dire :
si la durée des phases de déformation **Tsc** du skieur est inférieure à la durée des phases de déformation **Tref** du professionnel ;et
si la puissance moyenne de sollicitations **Psc** du skieur est supérieure à la puissance moyenne de sollicitations **Pref** du professionnel, et
si la vitesse **Vsc** du skieur est supérieure à la vitesse **Vref** du professionnel, et
si le nombre de virage **Nsc** du skieur est supérieur au nombre de virages **Nref** du professionnel,
alors le skieur peut être considéré comme ayant réussi le parcours X et autorisé à passer à une parcours de difficulté supérieure, dans une étape **309.** Dans le cas contraire, le skieur peut être conduit à refaire le parcours X.

Une comparaison plus simple peut être réalisée uniquement sur les critères de performances **Tsc** et **Psc,** en comparaison avec **Tref** et **Pref.** Par ailleurs, une comparaison plus poussée peut-être réalisée en ajoutant aux critères **Ts, Ps, Vs** et **Ns** d'autres critères pris seuls ou en combinaison qui seraient issus des capteurs de type accéléromètre, magnétomètre, baromètre ou encore caméra.

La comparaison entre les performances du skieur et du professionnel qui est le skieur de référence peut également être utilisée pour déterminer le niveau du skieur et pour ensuite le conseiller dans son apprentissage du ski en lui indiquant le parcours imposé X le plus adapté, ou encore en lui indiquant les types d'exercices spécifiques à réaliser sur piste libre, ou encore pour lui conseiller un cours de ski adapté à son niveau, dans une école de ski, ou encore pour lui conseiller un modèle de ski adapté à son niveau de ski. La comparaison peut également être utilisée pour entrer les données enregistrées dans une application de jeu vidéoludique.

Pour déterminer le niveau d'un skieur, outre les éléments précédemment décrits, l'organe de supervision **204** peut faire appel à des algorithmes de traitement et de classification ou de régression reposant sur un apprentissage supervisé, tels que les arbres de décision ou les réseaux de neurones. Pour ce faire, le modèle de classification doit être construit au moyen d'une phase d'apprentissage avec des skieurs de plusieurs niveaux évalués par des professionnels pour lesquels seront enregistrées au moins les performances **Tref, Pref** ainsi que la vitesse de référence **Vref.** L'enregistrement d'autres paramètres tels que le nombre de virages **Nref,** voire les performances de référence issues d'accéléromètres et/ou d'un magnétomètre permettra de donner des informations plus précises sur les différents types de skieurs. Ainsi, une classification des skieurs par niveau pourra être construite en base de données en définissant des seuils pour les différents niveaux des skieurs.

Autrement dit, pour évaluer le niveau du skieur, il est envisagé de lui proposer d'effectuer un parcours X de difficulté moyenne, puis de comparer ses performances enregistrées et corrigées **Tsc, Psc,** voire également **Vsc, Ns,** avec les seuils établis pour chacune des classes de niveau (correspondant par exemple aux classes 1 à 4 de l'ESF) et enregistrées en base de données.

L'analyse des performances du skieur **Ts, Ps** et **Vs** permettent facilement de positionner le skieur dans une classe de niveau pour définir le niveau du skieur.

L'analyse des performances du skieur **Ts, Ps** et **Vs** auxquelles on ajoute d'autres performances du skieur, telles que le nombre de virages **Ns,** ou les données issues d'un magnétomètre ou encore les données issues d'accéléromètres permettent de positionner le skieur dans une sous classe d'une classe de niveau pour établir avec une très grande précision le niveau du skieur.

Plus précisément, comparer les performances enregistrées et/ou corrigées du skieur en associant le paramètre enregistré de vitesse Vs ou Vsc permet de définir le niveau du skieur dans une classe.

L'analyse supplémentaire d'un des paramètres suivant enregis

Au sens de l'invention, la comparaison doit être réalisée au minimum avec les données intégrant une durée **Ts** des phases de déformation et une image **Ps** de la puissance moyenne de sollicitations de la planche de glisse **25** du skieur. La durée **Ts** correspond directement à un compte temporel **T** obtenue par le capteur **100** alors que l'image **Ps** de la puissance moyenne de sollicitations est déterminée par le rapport entre un compte d'activation **M** et le compte temporel **T** des phases de sollicitations estimées par la capteur **100.** Lors du calcul du rapport **Ps** entre **M** et **T,** un coefficient multiplicateur peut être appliqué à au compte d'activation **M.**

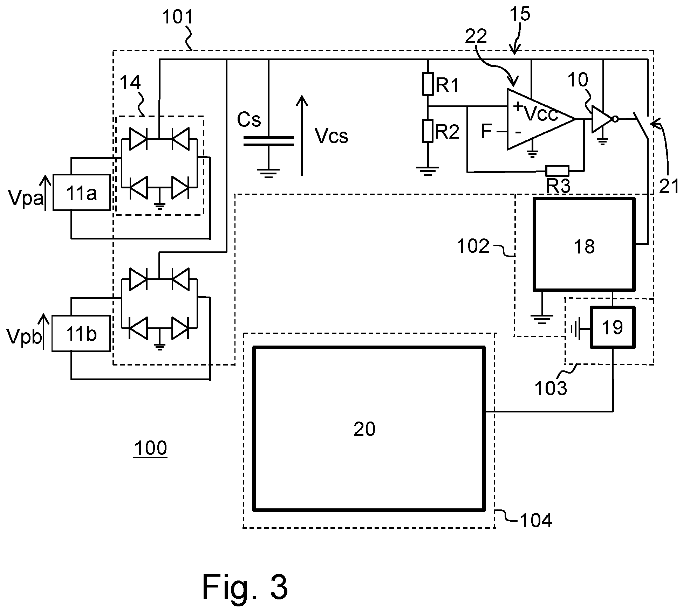

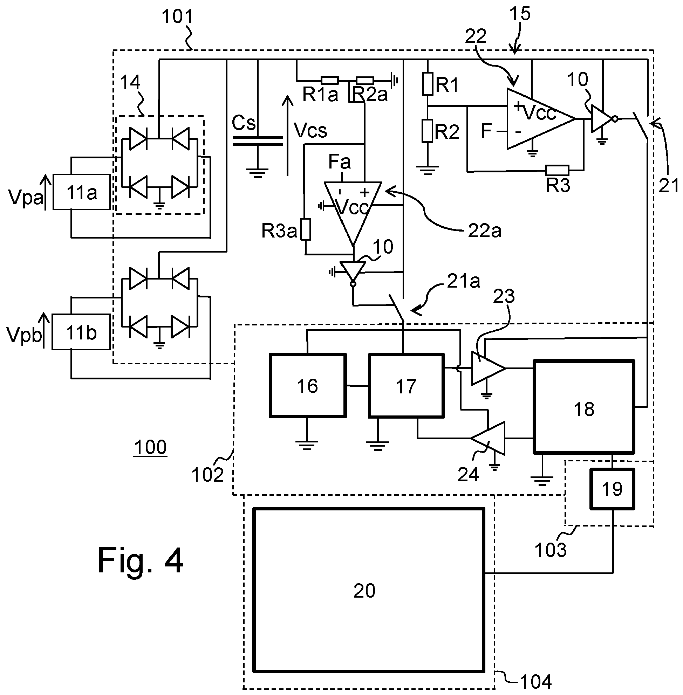

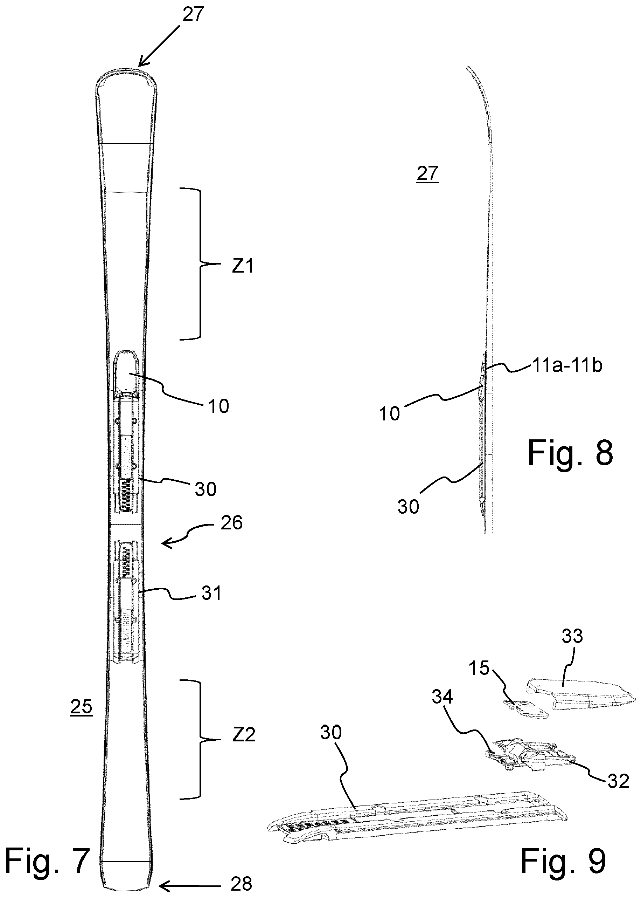

Les figures 3 et 4 représentent deux modes de réalisation d'un schéma électrique d'un capteur **100** d'une utilisation d'une planche de glisse **25** permettant de mesurer les informations **T** et **M.** Ce capteur **100** est solidarisé à une planche de glisse **25** comme cela sera illustré par les figures 7 à 15.

Selon ces deux modes de réalisation, le capteur **100** comprend, d'une part, au moins un élément destiné à produire de l'énergie électrique suite à une déformation, tel qu'un élément piézoélectrique **11a, 11b** et, d'autre part, un circuit électronique de traitement **15.** Le circuit électronique de traitement **15** comprend une partie relative au stockage et à la gestion de l'énergie électrique **101,** ainsi qu'une partie **102** relative à la détermination d'au moins une information liée à l'utilisation de la planche de glisse **25,** cette partie **102** comportant des éléments assurant les estimations et les calculs liés à l'utilisation de la planche de glisse **25.**

Afin de mémoriser les informations liées à l'utilisation de la planche de glisse **25,** le circuit électronique de traitement **15** comprend, en outre, une partie **103** relative à la mémorisation des données. Et enfin, afin d'assurer la communication de ces données enregistrées vers un dispositif externe au capteur **100,** le circuit électronique de traitement **15** comprend une partie **104** relative à la communication.

De manière commune aux deux modes de réalisation, le capteur **100** comporte au moins un élément piézoélectrique **11a, 11b,** ici au nombre de deux. Les éléments piézoélectriques **11a, 11b** ne sont pas directement reliés l'un à l'autre. Les éléments piézoélectriques **11a, 11b** peuvent être électriquement disposés en parallèle. Alternativement, les éléments piézoélectriques **11a, 11b** sont électriquement disposés en série l'un par rapport à l'autre.

Les deux éléments piézoélectriques **11a, 11b** sont destinés à générer un signal électrique durant l'utilisation de la planche de glisse **25.** Plus précisément, chaque élément piézoélectrique **11a, 11b** génère une tension électrique **Vpa, Vpb** en réponse à une déformation mécanique qu'il subit. En présence de plusieurs éléments piézoélectriques **11a, 11b** cette tension électrique **Vpa, Vpb** peut varier d'un élément piézoélectrique **11a, 11b** à l'autre.

Le circuit électronique de traitement **15** est uniquement alimenté par les éléments piézoélectriques **11a, 11b.** Ainsi le capteur **100,** formant lui-même un circuit électronique composé des éléments piézoélectriques **11a, 11b** ainsi que du circuit électronique de traitement **15,** est autonome, c'est-à-dire qu'il ne nécessite pas une source d'alimentation extérieure au capteur **100,** telle que par exemple une batterie rechargeable ou non.

En d'autres termes, les éléments piézoélectriques **11a, 11b** assurent à la fois le rôle de source d'information pour la détermination de l'utilisation de la planche de glisse **25** et le rôle de source d'alimentation électrique, comme cela sera décrit plus loin.

La tension **Vpa, Vpb** générée par chaque élément piézoélectrique **11a-11b** est une tension alternative, non continue, qui présente une grande variabilité en amplitude et en fréquence.

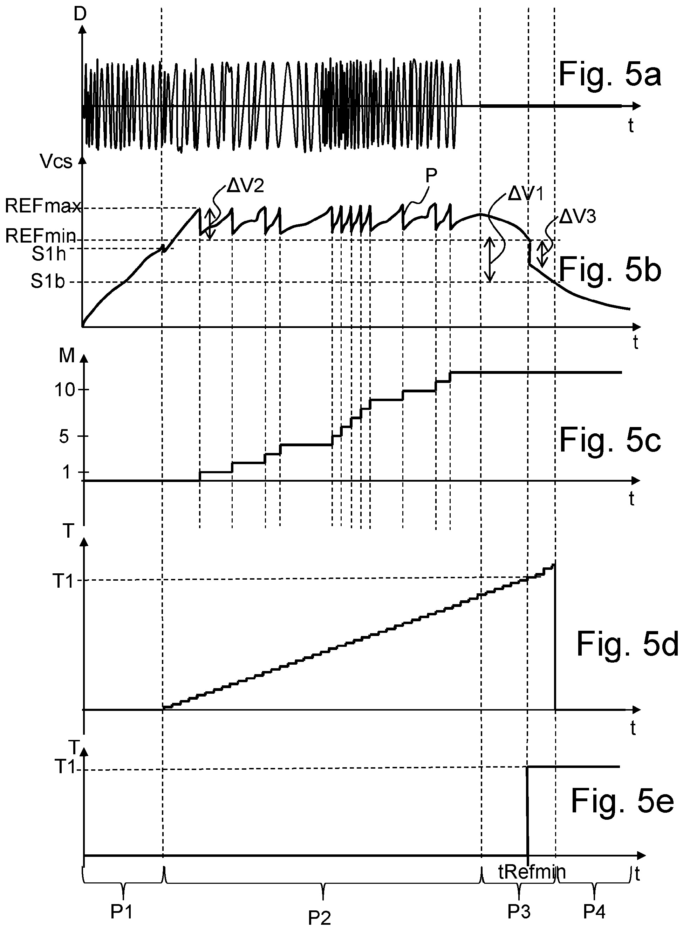

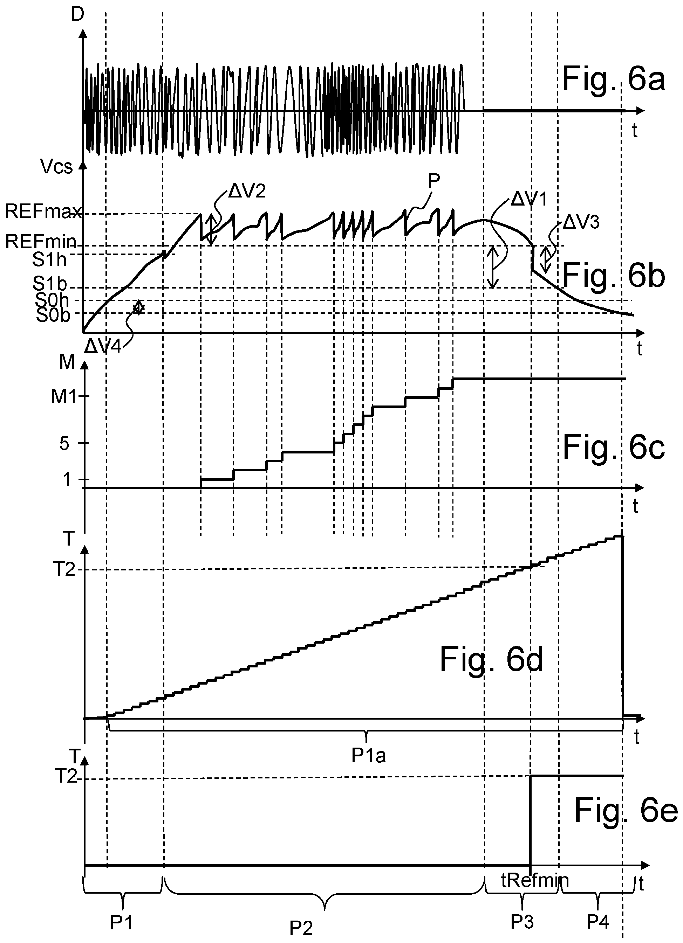

Tel que cela est illustré par les figures 5a et 6a, lors d'une phase **P1** dite de démarrage et lors d'une phase **P2** dite d'écriture, la planche de glisse **25** se déforme en flexion lorsqu'elle est utilisée et une surface **12** de la planche de glisse subit alors des déformations transmises aux éléments piézoélectriques **11a-11b** qui génèrent une tension **Vpa, Vpb** qui varie en fonction des déformations subies par la surface **12.** Lors d'une phase **P3,** dite d'arrêt, et d'une phase **P4,** dite d'extinction, la planche de glisse **25** est à l'arrêt et, de ce fait, elle n'est plus déformée, aussi la surface **12** ne subit pas de déformation et la tension **Vpa, Vpb** générée par les éléments piézoélectriques **11a-11b** devient nulle.

De manière commune aux deux modes de réalisation, la partie relative au stockage et à la gestion de l'énergie électrique **101** comporte au moins un convertisseur de tension **14,** au moins un élément de stockage capacitif **Cs** et au moins un comparateur de tension **22.**

La tension **Vpa, Vpb,** intrinsèquement variable, est injectée dans un convertisseur de tension **14** qui fournit une tension redressée ou continue à partir de la tension **Vpa, Vpb** générée par chaque élément piézoélectrique **11a-11b.**

Selon les deux modes de réalisation, ce convertisseur de tension **14** est réalisé par un pont de diodes qui fournit une tension redressée.

Selon une variante de réalisation, le convertisseur de tension **14** est réalisé par un hacheur de type « buck », de type « boost » ou de type « buck-boost », ces hacheurs présentent l'avantage de fournir une tension continue. Il est à noter que chaque élément piézoélectrique **11a-11b** est connecté sans élément intermédiaire au convertisseur de tension **14.** Dans le cas où les éléments piézoélectriques **11a, 11b** sont électriquement disposés en série ou en parallèle, il est avantageusement prévu un unique convertisseur de tension **14,** ce qui peut représenter une économie de fabrication non négligeable.

En sortie de ce convertisseur de tension **14,** la tension **Vpa, Vpb** générée par les éléments piézoélectriques **11a-11b** est stockée dans un élément de stockage capacitif **Cs,** de type super capacité ou condensateur. L'élément de stockage capacitif **Cs** peut comporter plusieurs super capacités ou condensateurs sans changer l'invention. Dans le cas où plusieurs condensateurs sont utilisés, ils sont alors électriquement disposés en parallèle les uns par rapport aux autres, la somme des capacités de chacun des condensateurs permettant d'obtenir la capacité équivalente de l'ensemble des condensateurs.

Les figures 5b et 6b illustrent la tension **Vcs** aux bornes de l'élément de stockage capacitif **Cs.** A l'état initial, c'est-à-dire lorsque la planche de glisse **25** n'est pas utilisée, l'élément de stockage capacitif **Cs** est complètement déchargé. Dans les phases de démarrage **P1** et d'écriture **P2,** la planche de glisse **25** est utilisée et se déforme en flexion, notamment sur la neige. Dans les phases de démarrage **P1** et d'écriture **P2,** les déformations de la planche de glisse **25,** et donc de la surface **12,** permettent de charger l'élément de stockage capacitif **Cs** par l'intermédiaire des éléments piézoélectriques **11a, 11b.**

Durant les phases d'arrêt **P3** et d'extinction **P4,** la planche de glisse **25** n'étant plus sollicitée, l'élément de stockage capacitif **Cs** se décharge. La partie **101** relative au stockage et à la gestion de l'énergie électrique comporte, en outre, au moins un comparateur de tension **22, 22a** configuré pour contrôler l'alimentation de la partie **102** relative à la détermination d'au moins une information liée à l'utilisation de la planche de glisse **25.**

Pour cela, le comparateur de tension **22, 22a** est configuré pour comparer la tension **Vcs** en sortie de l'élément de stockage capacitif **Cs** à deux valeurs de tension seuils **S1h, S1b, S0h, S0b,** comme cela sera décrit plus loin en relation avec la figure 5b et 6b.

De manière commune aux deux modes de réalisation, le comparateur de tension **22** est relié d'une part à l'élément de stockage capacitif **Cs** par une borne d'alimentation **Vcc,** à un interrupteur **21** en sortie, à une ou plusieurs résistances **R1, R2, R3** sur sa borne positive et à une référence de tension **F** sur sa borne négative. Avantageusement, en sortie du comparateur de tension **22,** un inverseur de signal **10** est disposé. Il est à noter que l'interrupteur **21** est, par exemple, un transistor de type PMOS. Bien entendu, cet interrupteur **21** peut également être un transistor de type NMOS et, dans ce cas, l'architecture du circuit électronique de traitement **15** devra être adaptée.

Par ailleurs, la partie **103** relative à la mémorisation des données comprend au moins une mémoire non volatile **19,** tel que cela sera décrit plus loin. Il est à noter qu'une mémoire est dite non volatile, dès lors que sa mise hors tension ne provoque pas la perte des données enregistrées.

Quant à la partie **104** relative à la communication, celle-ci comprend une antenne **20,** qui sera également décrite plus loin dans la description.

Selon le premier mode de réalisation illustré par la figure 3, le circuit électronique de traitement **15,** et notamment sa partie **102** relative à la détermination d'au moins une information liée à l'utilisation de la planche de glisse **25,** comprend un microcontrôleur **18.**

Le microcontrôleur **18** réalise des comptes binaires **T, M** et il est configuré pour comparer sa tension d'alimentation par rapport à au moins une valeur de tension de référence **REFmax, REFmin.** Selon ce mode de réalisation, le microcontrôleur **18** réalise deux comptes binaires, un compte binaire temporel **T** correspondant à une durée d'utilisation de la planche de glisse **25** et un compte binaire **M,** appelé compte d'activation, qui vise à représenter une information liée à l'amplitude des déformations de la planche de glisse **25.**

Autrement dit, selon ce mode de réalisation, le microcontrôleur **18** estime à la fois une durée d'utilisation et une amplitude des déformations de la planche de glisse **25.**

Il est à noter que, selon ce mode de réalisation, un unique comparateur de tension **22** est prévu. Ce comparateur de tension **22** réalise la fonction comparateur à hystérésis permettant la fermeture ou l'ouverture de l'interrupteur 21 afin de connecter, respectivement de déconnecter, le microcontrôleur **18** à l'élément de stockage capacitif **Cs.** Pour cela, il est défini deux seuils **S1h** et **S1b**, respectivement appelés dans la suite de la description seuil d'alimentation **S1h** et seuil de coupure **S1b**. Autrement dit, ce comparateur de tension **22** est configuré pour contrôler l'alimentation du microcontrôleur **18** en fonction du seuil d'alimentation **S1h** et du seuil de coupure **S1b.**

Lorsque la tension **Vcs** aux bornes de l'élément de stockage capacitif **Cs** atteint le seuil d'alimentation **S1h**, la sortie du comparateur de tension **22** passe à l'état haut.

Ce signal inversé permet la commande de l'interrupteur **21,** qui en se fermant, connecte l'élément de stockage capacitif **Cs** au microcontrôleur **18.**

Sur la figure 5b, après avoir atteint le seuil d'alimentation **S1h**, la tension **Vcs** diminue légèrement en réponse à la mise sous tension du microcontrôleur **18.**

A la fin des sollicitations de la planche de glisse **25** (phases **P3, P4),** l'élément de stockage capacitif **Cs** n'étant plus alimenté par les éléments piézoélectriques **11a, 11b,** apparait une décharge de l'élément de stockage capacitif **Cs.** Du fait de la contreréaction positive des résistances **R1, R2, R3** sur le comparateur de tension **22,** le seuil de coupure **S1b** est fixé à une valeur de tension égale à **S1b** = **S1h** - **ΔV1,** où **ΔV1** représente l'hystérésis généré par la mise en parallèle des résistances **R1** et **R3.**

Ainsi, lorsque la tension **Vcs** aux bornes de l'élément de stockage capacitif **Cs** passe en dessous du seuil de coupure **S1b**, la sortie du comparateur de tension **22** repasse à l'état bas, permettant l'ouverture de l'interrupteur **21** et déconnectant l'élément de stockage capacitif **Cs** au microcontrôleur **18.**

Dans la suite, le procédé de fonctionnement de la partie **102** relative à la détermination d'au moins une information liée à l'utilisation de la planche de glisse **25** sera décrit selon le premier mode de réalisation des figures 5a, 5b, 5c, 5d et 5e.

Une fois le microcontrôleur **18** sous-tension et que les éléments piézoélectriques **11a, 11b** continuent d'alimenter en énergie électrique l'élément de stockage capacitif **Cs** (phase **P2**), la tension **Vcs** atteint alors une valeur de référence maximale **REFmax.** Lorsque la tension **Vcs** atteint la valeur de référence maximale **REFmax,** le microcontrôleur **18** est configuré pour incrémenter le compte d'activation **M** et l'inscrire dans la mémoire non volatile **19,** comme le représente la figure 5c. Cette incrémentation ainsi que cette inscription en mémoire du compte d'activation **M** consomme une énergie représentée par une chute de tension **ΔV2** sur la figure 5b. Selon ce procédé de fonctionnement, le compte d'activation **M,** représentant l'énergie mécanique imposée à la planche de glisse **25,** est incrémenté de la valeur 1 à chaque fois que la valeur de référence maximale **REFmax** est atteinte par la tension **Vcs,** comme cela est illustré par la figure 5c.

Autrement dit, le compte d'activation **M** comptabilise le nombre de pics **P** où la tension **Vcs** a atteint la valeur de référence maximale **REFmax** au cours de la durée d'utilisation de la planche de glisse **25.**

Plus ces pics **P** sont serrés, plus la sollicitation de la planche de glisse **25** par l'utilisateur est importante, et plus les pics **P** sont espacés, plus la sollicitation de la planche de glisse **25** par l'utilisateur est faible.

Selon ce mode de réalisation, le compte temporel **T** est déterminé par une horloge interne au microcontrôleur **18** qui s'active dès la mise sous tension du microcontrôleur **18,** comme le montre la figure 5d. Autrement dit, le compte temporel **T** démarre dès que la tension **Vcs** atteint le seuil d'alimentation **S1h.**

Lorsque les flexions de la planche de glisse **25** s'interrompent, les éléments piézoélectriques **11a, 11b** cessent d'alimenter en énergie électrique l'élément de stockage capacitif **Cs,** dont la tension **Vcs** diminue progressivement en passant par une valeur de référence minimale **REFmin.** Selon ce procédé de fonctionnement, dès que la tension **Vcs** atteint cette valeur de référence minimale **REFmin,** le microcontrôleur **18** est configuré pour inscrire le compte temporel **T** dans la mémoire non volatile **19.**

Il est à noter que l'inscription de ce compte temporel **T** induit une chute de tension **ΔV3.**Dans ce premier mode de réalisation, les seuils sont définis de sorte que :
**S1b** < **S1h** < **REFmin** < **REFmax.**

Durant les phases **P2** et **P3,** le circuit électronique de traitement **15** réalise au moins un compte binaire **T, M** en utilisant la tension **Vcs** aux bornes de l'élément de stockage capacitif **Cs.**

Dans les phases **P3** et **P4,** lorsque l'activité de la planche de glisse **25** est arrêtée, le comptage du nombre d'activation **M** est arrêté automatiquement étant donné que la valeur de référence maximale **REFmax** n'est plus atteinte, tandis que le comptage de la durée d'utilisation **T** par le microcontrôleur **18** est arrêté à la fin de la phase **P3,** et au début de la phase **P4** lorsque que la tension **Vcs** est inférieure ou égale au seuil de coupure **S1b** (figure 5d). Toutefois, selon ce procédé de fonctionnement le comptage de la durée d'utilisation **T** par le microcontrôleur **18** après le temps **tRefmin** n'est pas enregistré dans la mémoire non volatile 19 (cf. fig. 5e).

Lorsque la tension **Vcs** aux bornes de l'élément de stockage capacitif **Cs** atteint le seuil de coupure **S1b**, le microcontrôleur **18** est mis hors tension et les données relatives aux comptes binaires **T** et **M** restent dans la mémoire non volatile **19,** comme cela est illustré par les figures 5c et 5e.

Dans la suite, les éléments propres au deuxième mode de réalisation illustré par la figure 4 sont détaillés. Selon ce deuxième mode de réalisation, le microcontrôleur **18** réalise un unique compte binaire, le compte d'activation **M.** Autrement dit, selon ce mode de réalisation, le microcontrôleur **18** estime l'amplitude des déformations de la planche de glisse **25.**

En effet, le compte temporel **T** est obtenu par un oscillateur **16,** un compteur **17** qui sont ici des éléments distincts du microcontrôleur **18.**

L'oscillateur **16** permet de délivrer un signal périodique au compteur **17.** A chaque période du signal périodique de l'oscillateur **16,** le compteur **17** incrémente le compte temporel **T.** Par exemple, l'oscillateur **16** peut être un oscillateur à quartz et le compteur **17** peut être réalisé en mettant en cascade une série de bascules T.

Dans ce deuxième mode de réalisation, l'oscillateur **16** et le compteur **17** sont alimentés par l'élément de stockage capacitif **Cs** à l'aide d'un deuxième comparateur de tension **22a.**

Ce deuxième comparateur de tension **22a,** muni d'une référence externe **Fa** et entouré des résistances **R1a**, **R2a, R3a,** réalise la fonction comparateur à hystérésis permettant la fermeture, respectivement l'ouverture, de l'interrupteur **21a** afin de connecter, respectivement de déconnecter, l'oscillateur **16** et le compteur **17** à l'élément de stockage capacitif **Cs.**

Pour cela, il est défini deux seuils **S0h** et **S0b,** respectivement appelé dans la suite de la description seuil de comptage **S0h** et seuil de désactivation **S0b.** Autrement dit, le capteur **100,** selon ce deuxième mode de réalisation, comprend deux comparateurs de tension **22, 22a,** avec un premier comparateur de tension **22** configuré pour contrôler l'alimentation du microcontrôleur **18** en fonction du seuil d'alimentation **S1h** et du seuil de coupure **S1b** et un deuxième comparateur de tension **22a** configuré pour contrôler l'alimentation de l'oscillateur **16** et du compteur **17** en fonction du seuil de comptage **S0h** et du seuil de désactivation **S0b.**

Dans ce second mode de réalisation, les seuils sont définis de sorte que :
**S0b** < **S0h** < **S1b** < **S1h.**

Lorsque la tension **Vcs** aux bornes de l'élément de stockage capacitif **Cs** atteint le seuil de comptage **S0h,** la sortie du deuxième comparateur de tension **22a** passe à l'état haut, permettant la commande de l'interrupteur **21a,** qui en se fermant, connecte l'élément de stockage capacitif **Cs** à l'oscillateur **16** et au compteur **17.** Sur la figure 6b, après avoir atteint le seuil de comptage **S0h,** la tension **Vcs** diminue légèrement en réponse à la mise sous tension de l'oscillateur **16** et du compteur **17.** A compter du seuil de comptage **S0h,** une phase de comptage **P1a** débute jusqu'à la mise hors tension de l'oscillateur **16** et du compteur **17.**

Les sollicitations se poursuivant, la tension **Vcs** aux bornes de l'élément de stockage capacitif **Cs** atteint le seuil d'alimentation **S1h**, qui permet une alimentation du microcontrôleur **18** via le premier comparateur de tension **22,** comme cela a été décrit précédemment.

A la fin des sollicitations de la planche de glisse **25,** l'élément de stockage capacitif **Cs** n'étant plus alimenté par les éléments piézoélectriques **11a, 11b,** apparait alors une décharge de l'élément de stockage capacitif **Cs.**

Ainsi, lorsque la tension **Vcs** aux bornes de l'élément de stockage capacitif **Cs** passe en dessous du seuil de coupure **S1b**, la sortie du premier comparateur de tension **22** repasse à l'état bas, permettant l'ouverture de l'interrupteur **21** et déconnectant l'élément de stockage capacitif **Cs** au microcontrôleur **18.** Par ailleurs, bien que le microcontrôleur **18** ait été déconnecté, la décharge de l'élément de stockage capacitif **Cs** se poursuit.

Du fait de la contreréaction positive des résistances **R1a-R3a** sur le deuxième comparateur de tension **22a,** le seuil de désactivation **S0b** est fixée à une valeur de tension égale à **S0b** = **S0h** - **ΔV4,** où **ΔV4** représente l'hystérésis généré par la mise en parallèle des résistances **R1a** et **R3a.**

Ainsi, lorsque la tension **Vcs** aux bornes de l'élément de stockage capacitif **Cs** passe en dessous du seuil de désactivation **S0b**, la sortie du deuxième comparateur de tension **22a** repasse à l'état bas, permettant l'ouverture de l'interrupteur **21a** et déconnectant l'élément de stockage capacitif **Cs** de l'oscillateur **16** et du compteur **17.**

Le procédé de fonctionnement de la partie **102** relative à la détermination d'au moins une information liée à l'utilisation de la planche de glisse **25** est ensuite décrit selon le deuxième mode de réalisation à l'aide des figures 6a, 6b, 6c, 6d et 6e.

Une fois l'oscillateur **16** et le compteur **17** sous-tension et que les éléments piézoélectriques **11a, 11b** continuent d'alimenter en énergie électrique l'élément de stockage capacitif **Cs,** le compte temporel **T** est incrémenté puis stocké dans une mémoire tampon, c'est-à-dire une mémoire temporaire qui lorsqu'elle est mise hors tension s'efface. La mémoire tampon évolue à la fréquence du compteur **17.** De la même manière que précédemment, une fois le microcontrôleur **18** sous-tension (phase **P2),** le microcontrôleur **18** est configuré pour incrémenter le compte d'activation **M** et l'inscrire dans la mémoire non volatile **19** dès que la tension **Vcs** atteint la valeur de référence maximale **REFmax,** comme le représente la figure 6c.

Cette incrémentation, ainsi que cette inscription en mémoire du compte d'activation **M,** consomme une énergie représentée par une chute de tension **ΔV2** sur la figure 6b.

Lorsque les flexions de la planche de glisse **25** s'interrompent, les éléments piézoélectriques **11a, 11b** cessent d'alimenter en énergie électrique l'élément de stockage capacitif **Cs,** dont la tension **Vcs** diminue progressivement en passant par une valeur de référence minimale **REFmin.**

Dès que la tension **Vcs** atteint cette valeur de référence minimale **REFmin,** le microcontrôleur **18** est configuré pour lire le compte temporel **T** inscrit dans la mémoire tampon et l'inscrire dans la mémoire non volatile **19.** Il est à noter que l'inscription de ce compte temporel **T** induit une chute de tension **ΔV3.**

De plus, afin d'adapter les niveaux de tension entre le compteur **17** et le microcontrôleur **18,** le circuit de traitement électronique **15** comprend des buffers.

Dans ce deuxième mode de réalisation, les seuils sont définis de sorte que :
**S0b** < **S0h** < **S1b** < **S1h** < **REFmin** < **REFmax.**

Durant les phases **P1, P2** et **P3,** le circuit électronique de traitement **15** réalise au moins un compte binaire **T, M** en utilisant la tension **Vcs** aux bornes de l'élément de stockage capacitif **Cs.** Dans les phases **P3** et **P4,** lorsque l'activité de la planche de glisse est arrêtée, le comptage des sollicitations **M** est arrêté automatiquement étant donné que la valeur de référence maximale **REFmax** n'est plus atteinte, tandis que le comptage de la durée d'utilisation **T** par l'oscillateur **16** et le compteur **17** continue. Lorsque la tension **Vcs** aux bornes de l'élément de stockage capacitif **Cs** atteint le seuil de coupure **S1b**, le microcontrôleur **18** est mis hors tension et les données relatives aux comptes binaires **T,** telles que la durée d'utilisation **T2** et le nombre d'activation **M1**, restent dans la mémoire non volatile **19,** comme cela est illustré par les figures 6c et 6e.

Il est à noter que la durée d'utilisation **T2** est supérieure à la durée d'utilisation **T1** calculée avec le premier mode de réalisation, car le comptage par le compteur **17** a été mis en œuvre plus tôt.

Le comptage de la durée d'utilisation **T** est arrêté à la fin de la phase **P1a**, lorsque que la tension **Vcs** est inférieure ou égale au seuil de désactivation **S0b.** Toutefois, la mise hors tension de l'oscillateur **16** et du compteur **17** a pour conséquence de remettre à zéro la mémoire tampon, comme le montre la figure 6d.

De plus, comme illustré par la figure 6e, la mise en mémoire du compte temporel **T** dans la mémoire non volatile **19** est réalisée au temps **tREFmin,** par conséquent la durée comptabilisée après **tREFmin** est perdue.

Que ce soit pour le premier mode de réalisation illustré par la figure 3 ou pour le deuxième mode de réalisation illustré par la figure 4, des variantes de réalisation du procédé de fonctionnement ont été identifiées.

Selon une première variante du procédé de fonctionnement, il est possible de prévoir que, dès que la tension **Vcs** aux bornes de l'élément de stockage capacitif **Cs** atteint la valeur de référence maximale **REFmax,** le microcontrôleur **18** est configuré pour inscrire dans la mémoire non volatile **19** à la fois le compte d'activation **M** et le compte temporel **T.** Une telle variante permet de s'affranchir de la valeur de référence minimale **REFmin.** Selon une variante particulière, la valeur de référence maximale **REFmax** est égale à **S1h**, ce qui permet de s'affranchir des références.

Selon une deuxième variante du procédé de fonctionnement, il est possible de prévoir que, dès que la tension **Vcs** aux bornes de l'élément de stockage capacitif **Cs** atteint la valeur de référence maximale **REFmax,** le microcontrôleur **18** est configuré pour inscrire dans la mémoire non volatile **19,** en alternance le compte d'activation **M** puis le compte temporel **T.** L'alternance est de préférence régulière, telle qu'une fois sur N, où N est par exemple égal à deux.

Dans ce cas, le compte d'activation **M** est incrémenté de la valeur N à chaque fois que la valeur de référence maximale **REFmax** est atteinte par la tension **Vcs.**

Selon une troisième variante de procédé de fonctionnement, dans laquelle la mémoire non volatile **19** comprend plusieurs cases de stockage de données, il est possible de prévoir que, dès que le microcontrôleur **18** est alimenté, c'est-à-dire dès que la tension **Vcs** aux bornes de l'élément de stockage capacitif **Cs** atteint le seuil d'alimentation **S1h**, il inscrit dans une première case de la mémoire non volatile **19** le compte temporel **T.** Lorsque la tension **Vcs** aux bornes de l'élément de stockage capacitif **Cs** atteint de nouveau le seuil d'alimentation **S1h**, le microcontrôleur **18** inscrit le nouveau compte temporel **T** dans une deuxième case de la mémoire non volatile **19** et ainsi de suite, de manière à former une mémoire empilée.

La somme des cases empilées ou la dernière case empilée, suivant que l'horloge interne **18** ou le compteur **17** est remis à zéro ou non à chaque inscription, correspond à une estimation de la durée d'utilisation de la planche de glisse **25.** Selon cette troisième variante de procédé de fonctionnement, le compte d'activation **M** est égal au nombre de cases empilées. Par case empilée, il est entendu une case dans laquelle une donnée a été enregistrée. La valeur **M1** du compte d'activation **M** est alors déterminée en fin d'inscription, par exemple lors de la lecture des données enregistrées dans la mémoire non volatile **19.**

Dans tous les cas, excepté le cas de la troisième variante de procédé de fonctionnement précédemment décrite, lors de l'écriture dans la mémoire non volatile **19,** le microcontrôleur **18** est configuré pour réaliser :
- une lecture du compte temporel **T** et du compte d'activation **M** qui ont été précédemment enregistrés dans la mémoire non volatile **19,** par exemple lors d'enregistrements précédents correspondant aux utilisations précédentes de la planche de glisse;
- une mise à jour du compte temporel **T** et du compte d'activation **M** par incrémentation des valeurs **T** et **M** précédemment enregistrées par les valeurs **T** et **M** qui viennent d'être calculées ; et
- un enregistrement du nouveau compte temporel **T** et du nouveau compte d'activation **M** dans la mémoire non volatile **19.**

Pour le cas de la troisième variante de procédé de fonctionnement, lors de l'écriture dans la mémoire non volatile **19,** le microcontrôleur **18** est configuré pour :
- identifier une case vide adjacente à une case remplie ou la première case vide pour le cas d'une première écriture en mémoire, et
- enregistrer la valeur du compte temporel **T** dans la case identifiée lors de l'étape précédente.

Ainsi, quelle que soit la variante de procédé de fonctionnement choisie, la mémoire non volatile **19** contient la valeur **T,** correspondant au temps d'utilisation de la planche de glisse depuis sa première utilisation sur la neige ainsi que la valeur **M,** correspondant au niveau de sollicitations de la planche de glisse depuis sa première utilisation sur la neige

On comprend que le compte temporel **T** contient une information liée au temps de déformation de la surface **12** de la planche de glisse et donc une information liée au temps d'utilisation de la planche de glisse.

En faisant l'approximation que la phase de démarrage **P1** de l'élément de stockage capacitif est très faible comparativement aux phases durant lesquelles le microcontrôleur **18** est actif, c'est-à-dire les phases **P2** et **P3,** il est possible d'assimiler le compte temporel **T** à la durée d'utilisation de la planche de glisse **25.**

De plus, le comptage de ce compte temporel **T** utilise des opérations ou des composants peu consommateurs en énergie, par exemple d'une puissance de moins de 5µWatts.

Le capteur **100** pourrait uniquement fournir ce premier paramètre correspondant au compte temporel **T.** Par contre, l'invention peut également donner accès à d'autres valeurs que **T** en fonction des composants électroniques choisis pour former le circuit électronique de traitement **15.**

Aussi, en particulier, l'invention propose de fournir un deuxième paramètre qui est le compte d'activation **M.** Ce compte d'activation **M,** vise à représenter une information liée à l'amplitude des déformations de la surface **12.** Autrement dit, cette information représente l'intensité de l'activité de la planche de glisse, ou la façon dont est réellement sollicitée la planche de glisse.

Plus précisément, les opérations de lecture du nombre précédent et d'écriture du nouveau nombre en mémoire par le microcontrôleur consomment une puissance électrique importante.

Le compte d'activation **M** représente donc le nombre de fois que le microcontrôleur **18** a consommé cette quantité d'énergie, il est donc lié à la quantité d'énergie consommée par le microcontrôleur **18** dans son mode actif. En faisant l'approximation que la réalisation du compte temporel **T** et que les phases de démarrage et d'arrêt du microcontrôleur **18** présentent des consommations négligeables par rapport à la quantité d'énergie consommée lors de l'incrémentation de ce compte d'activation **M,** il est possible de lier le compte d'activation **M** à la quantité d'énergie stockée dans l'élément de stockage capacitif **Cs,** et à la quantité d'énergie générée par la déformation de la surface **12.** Ainsi, plus le compte **M** est élevé, plus la planche de glisse **25** a été fortement sollicitée.

En faisant le rapport entre le compte d'activation **M** et la durée d'utilisation **T,** il est possible d'estimer la puissance appliquée par l'usager.

Cette puissance peut être soit calculée grâce à des éléments électroniques appropriés ajoutés au circuit électronique de traitement **15,** non illustrés, puis être stockée dans la mémoire non volatile **19,** soit être calculée après transmission des valeurs des comptes temporel **T** et d'activation **M** à un lecteur externe, non illustré.

Des résultats de mesures effectuées sur des skis alpins ont donné des valeurs du compte d'activation **M** très différentes suivant le niveau du skieur. En effet, par exemple, un utilisateur adulte d'un bon niveau de ski réalise 100 écritures mémoires (c'est-à-dire incrémentation du compte **M** de 100) en 10s, tandis qu'un jeune enfant débutant, évoluant en chasse neige réalise seulement 2 écritures mémoires (c'est-à-dire incrémentation du compte **M** de 2) en 10s. Le compte d'activation **M** est donc un bon indicateur de l'activité du ski, et donc du niveau du skieur. Plus la valeur **M** est grande après une durée d'utilisation définie, plus le niveau d'activité du skieur et donc plus son niveau de ski est élevé, la planche de glisse ayant alors été sollicitée de façon importante.

Enfin, en faisant l'approximation que la puissance électrique du circuit électronique de traitement **15** est consommée principalement par le microcontrôleur **18** lors de l'écriture des comptes **T, M** en mémoire, il est possible d'estimer un état d'usure de la planche de glisse, ou un niveau d'engagement d'un skieur en connaissant le compte d'activation **M** et l'énergie consommée par le microcontrôleur **18** à chaque incrémentation du compte d'activation **M.**

Il est ainsi possible de connaitre l'usage réel du ski, et ainsi de savoir si le skieur sollicite peu ou beaucoup son ski ce qui peut permettre d'informer un skieur sur la différence d'énergie imposée à un ski par rapport à un autre, dans le cas où les deux skis de la paire de skis sont équipés capteur **100.** Par exemple, il est possible de savoir si un skieur sollicite trop fortement une jambe par rapport à l'autre.

Après l'enregistrement des valeurs du compte temporel **T** et du compte d'activation **M** dans la mémoire non volatile **19,** le microcontrôleur **18** ou le compteur **17** est remis à zéro, du fait de leur mise hors tension. Toutefois, il est envisageable, dans le cas du deuxième mode de réalisation illustré par la figure 4, de prévoir que le microcontrôleur **18** est configuré pour remettre à zéro le compteur **17** avant que le seuil de coupure **S1b** ne soit atteint ou après une écriture en mémoire du compte temporel **T.**

La remise à zéro du microcontrôleur **18** ou du compteur **17** permet d'éviter un dépassement de la valeur maximale que peut contenir le compteur **17,** ce dépassement ayant pour conséquence sa remise à zéro automatique, ce qui impliquerait une erreur dans le calcul du compte temporel **T.**

En outre, les valeurs des comptes **T** et **M** peuvent être extraites du circuit électronique de traitement **15** pour obtenir l'information liée au temps de déformation de la planche de glisse et donc à la durée d'utilisation de la planche de glisse issue du compte **T** et/ou une information liée à l'amplitude des déformations de la planche de glisse issue du compte **M.** Il est également possible de calculer la puissance mécanique générée par l'utilisateur et en particulier par le skieur. En effet, comme cela a été décrit précédemment, le calcul de la grandeur **M/T** reflète la puissance mécanique générée par l'utilisateur qui peut être corrélée au niveau du skieur. Les valeurs **M** et **M/T** permettent, en outre, de donner des informations sur l'usure réelle de la planche de glisse ainsi que sur l'activité réelle de l'utilisateur en lien avec sa performance et son niveau.

Afin d'assurer la communication et l'extraction des valeurs stockées dans la mémoire non volatile **19,** le circuit électronique de traitement **15** comprend une partie **104** relative à la communication.

Cette partie **104** peut éventuellement comprendre un connecteur filaire assurant la transmission des données mais, préférentiellement, le circuit électronique de traitement **15** comporte une antenne radiofréquence **20** configurée pour alimenter par couplage électromagnétique la mémoire non volatile **19.**

Ainsi, un lecteur externe peut obtenir, sans fil, les comptes **T** et **M.** Ce système de transmission « RFID » comporte un tag passif qui utilise l'onde issue de l'interrogateur/lecteur pour alimenter la mémoire non volatile **19** et ainsi transmettre les comptes **T** et **M** à l'interrogateur/lecteur.

De préférence, le lecteur externe peut également commander le microcontrôleur **18** pour remettre à zéro la valeur des comptes **T** et **M** dans la mémoire non volatile **19.**

Le lecteur externe peut être présent chez un loueur de ski ou un centre d'étude du comportement du skieur afin de centraliser les informations captées sur chaque ski, ou peut être accessible directement par l'utilisateur lui-même par utilisation d'un appareil de type « Smartphone » par exemple.

Ainsi, le lecteur externe peut extraire les comptes **T** et **M** pour obtenir une information liée à la durée d'utilisation de la planche de glisse et/ou à l'amplitude des déformations de ladite surface **12** et/ou pour calculer la puissance mécanique générée par l'utilisateur et en particulier par le skieur.

L'intégration d'un tel capteur **100** à une planche de glisse **25** est décrit dans la suite de la description. Dans la description qui va suivre, les termes relatifs tels que « avant », « arrière », « supérieur », « inférieur », sont définis par rapport à la planche de glisse **25.**

Plus précisément, ces termes sont définis par rapport à un axe longitudinal, un axe transversal et un axe vertical de la planche de glisse **25,** l'axe longitudinal étant l'axe selon lequel une longueur maximale de la planche de glisse **25** est mesurée, l'axe vertical étant l'axe orthogonal au plan de la planche de glisse **25** et l'axe transversal étant orthogonal à la fois à l'axe longitudinal et à l'axe vertical. Les termes « avant » et « arrière » sont définis le long de l'axe longitudinal de la planche de glisse **25,** par rapport à la position du skieur ou de la fixation. Les termes « supérieur » et « inférieur » sont définis le long de l'axe vertical de la planche de glisse **25,** avec la partie inférieure étant destinée à être au contact de la neige, du sol ou de l'eau.

L'invention est illustrée en particulier sur les figures 7 à 15 sur une planche de ski qui est un ski alpin ou un ski de randonnée.

La figure 7 illustre une planche de glisse **25** présentant une partie avant **27,** une partie arrière **28** et une zone centrale **26** destinée au montage de la fixation, disposée entre ces deux parties **27, 28.** La partie avant **27** fait référence à la partie de la planche de glisse **25** qui est normalement positionnée devant le skieur et qui forme la spatule alors que la partie arrière **28** fait référence à la partie de la planche de glisse **25** qui est normalement positionnée derrière le skieur et qui forme le talon de la planche de glisse **25.**

Les éléments de fixation, non représentés, sont montés sur un élément d'interface qui est composé, dans le mode de réalisation illustré, de rails de montage et de guidage **30** et **31,** les éléments de fixation pouvant coulisser sur ces rails pour être réglés à la longueur de la chaussure du skieur. Ces rails de montage sont solidarisés à la face supérieure de la planche de glisse **25.** Cette fixation est orientée de sorte que le skieur soit orienté vers la partie avant **27** dans le sens de la descente.

Dans une variante non représentée, l'élément interface peut être composé d'au moins une plaque sur laquelle sont fixés les éléments de fixation, ceci permettant de surélever les éléments de fixation par rapport à la surface supérieure de la planche de glisse **25.**

La planche de glisse **25** présente une forme profilée adaptée à la pratique du ski sur neige. En variante, tous les types de planche de glisse **25** peut être utilisés sans changer l'invention.

La fixation, non représentée, comporte une butée avant destinée à être positionnée dans le rail avant **30,** pour fixer la partie avant de la chaussure du skieur, et une talonnière arrière destinée à être positionnée dans le rail arrière **31,** pour fixer l'arrière de la chaussure du skieur.

Cette butée avant et cette talonnière arrière forment les éléments de fixation de la chaussure sur la planche de glisse.

En variante, la forme, le type de fixation, le type de rails ou interface de montage de la fixation sur la planche de glisse peuvent également varier sans changer l'invention.

Dans le cas de la planche de glisse **25** de la figure 7, les zones **Z1** et **Z2** illustrent les deux zones dans lesquelles la planche de glisse **25** subit un maximum de déformation lors de la flexion de la planche de glisse **25** lors de son utilisation sur la neige.

Ces zones **Z1** et **Z2** sont également des zones dans lesquelles la planche de glisse **25** subit de forts risques de chocs. Par exemple, les deux skis d'un skieur peuvent se croiser dans ces zones **Z1** et **Z2.**

Pour récupérer l'énergie mécanique liée à la déformation de la planche de glisse **25,** l'invention propose d'utiliser au moins un élément piézoélectrique **11a-11b.** Dans le mode de réalisation illustré, ces éléments piézoélectriques **11a-11b** sont préférentiellement disposés entre le rail avant **30** supportant la butée de la fixation et la zone **Z1** subissant un maximum de déformation.

Autrement dit, ces éléments piézoélectriques **11a-11b** sont positionnés très proche de la zone **Z1,** dans une zone où les déformations restent suffisantes, et où ils restent suffisamment protégés, en particulier des chocs extérieurs.

Il est néanmoins possible de positionner les éléments piézoélectriques **11a-11b** dans les zones de déformations maximales **Z1** et **Z2** sans changer l'invention. Dans ce cas, des éléments de protection pourront être ajoutés, en particulier sur les côtés latéraux des éléments piézoélectriques **11a-11b.**

L'énergie générée par ces éléments piézoélectriques **11a-11b** est transmise à un circuit électronique de traitement **15.**

De préférence, tel qu'illustré sur la figure 9, ce circuit électronique de traitement **15** est disposé très proche des éléments piézoélectriques **11a-11b** ceci pour faciliter le branchement des fils électriques entre les éléments piézoélectriques **11a-11b** et le circuit électronique de traitement **15.**

En particulier, le circuit électronique de traitement **15** est monté dans un boitier positionné au-dessus des deux éléments piézoélectriques, à l'extrémité du rail de montage avant **30** de la butée de la fixation.

Dans d'autres modes de réalisation, non illustrés, le boitier électronique contenant le circuit électronique pourrait être monté en toute autre position de la planche de glisse **25,** de préférence proche de la zone montage des fixations **26,** à l'avant ou à l'arrière de cette zone, voire entre les éléments de fixation avant et arrière de la chaussure, voire à l'intérieur d'une plaque interposée entre la planche de glisse **25** et la fixation de ski.

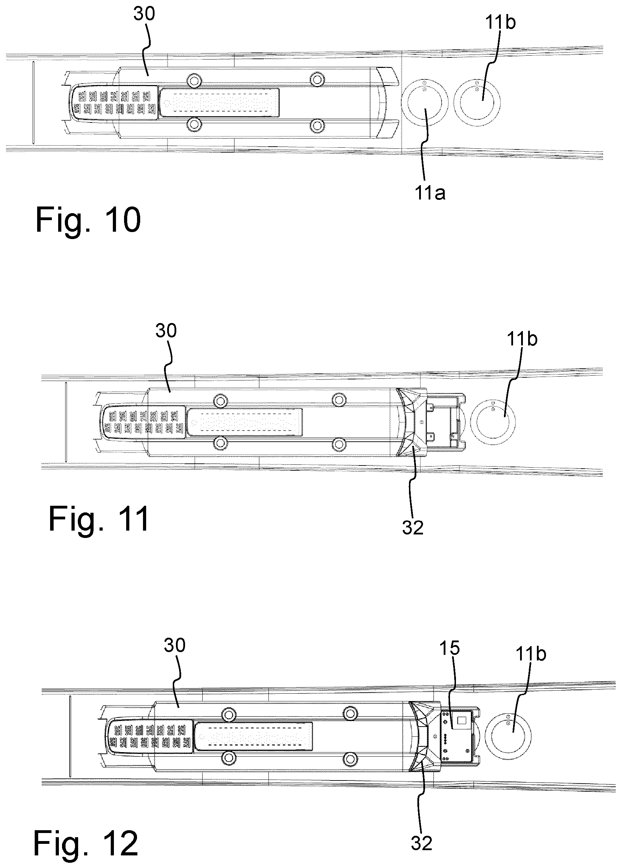

Les figures 10 à 13 illustrent le montage des éléments piézoélectriques **11a-11b** et du circuit électronique **15** sur la planche de glisse **25.** Comme illustrée sur la figure 10, les éléments piézoélectriques **11a-11b** sont solidarisés à la planche de glisse **25** et plus précisément sur une surface d'un élément de la planche de glisse, surface qui peut être interne ou externe à la planche de glisse. Ils peuvent être soit rapportés par collage après le moulage de la planche de glisse **25** sur l'une des couches de la structure de la planche de glisse **25,** soit être noyés et donc intégrés à l'intérieur de la structure de la planche de glisse **25** pendant le moulage de la planche de glisse **25.**

Les figures 10 à 13 illustrent l'agencement de deux éléments piézoélectriques **11a-11b** juxtaposés.

En variante, un seul élément piézoélectrique peut être agencé. Le nombre d'éléments piézoélectriques **11a-11b** est choisi de telle façon que la récupération d'énergie soit suffisante pour alimenter le circuit électronique de traitement **15** associé.

Selon l'exemple illustré, chaque élément piézoélectrique **11a-11b** comporte une partie centrale circulaire supérieure formant la partie active du matériau piézoélectrique, configurée pour capter les déformations d'une surface **12** de la planche de glisse **25,** et une partie circulaire inférieure, disposée au-dessous de la partie centrale circulaire et de dimensions plus larges que celle-ci, formant une masse de référence.

Bien entendu, d'autres formes d'éléments piézoélectriques peuvent être utilisées, comme par exemple des éléments piézoélectriques en forme de quadrilatère. Une énergie électrique produite lors d'une déformation de la surface **12** de la planche de glisse **25** est captée entre la partie centrale circulaire supérieure et la partie circulaire inférieure. En variante, d'autres formes d'élément piézoélectrique **11a-11b** peuvent être utilisées sans changer l'invention. Il est à noter que l'énergie électrique produite par chaque élément piézoélectrique **11a, 11b** est proportionnelle au volume de matière piézoélectrique qu'il comprend.

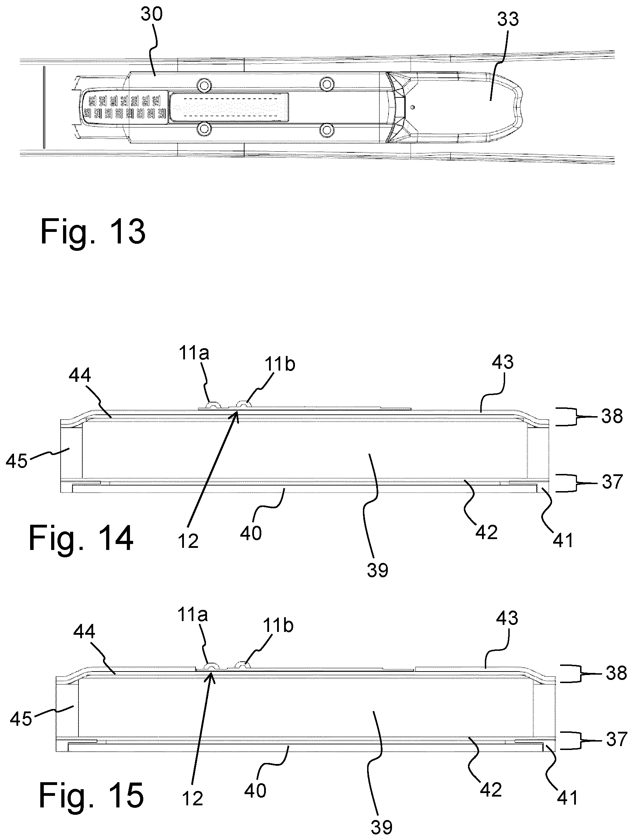

La structure interne de la planche de glisse **25** est décrit dans les paragraphes qui suivent en référence aux figures 14 et 15 afin d'illustrer l'intégration des éléments piézoélectriques **11a-11b** à la planche de glisse **25** et en particulier pour montrer sur quelle surface **12** de la planche de glisse **25 les** éléments piézoélectriques peuvent être fixés.

La planche de glisse **25** comporte un ensemble inférieur **37,** et un ensemble supérieur **38,** séparés par un noyau **39.**

Plus précisément, l'ensemble inférieur **37** comporte une semelle de glisse **40,** typiquement à base de polyéthylène, sur laquelle reposent latéralement les ailettes des carres métalliques **41.** Dans la forme illustrée, cet ensemble inférieur **37** inclut également une couche de renfort **42.**

La planche de glisse **25** inclut également un ensemble supérieur **38** comportant une couche de décoration et de protection **43,** reposant sur une couche de renfort **44.**

La couche de décoration et de protection **43** peut être réalisée de différentes manières, et inclure sur sa face inférieure des zones imprimées apparentes depuis la face supérieure de la planche, ou bien encore des zones transparentes, permettant de rendre apparente depuis l'extérieur la couche de renfort **44.**

Les ensembles supérieur **38** et inférieur **37** sont séparés principalement par le noyau **39,** qui est bordé latéralement par les chants latéraux **45** qui protègent le noyau **39** de l'humidité extérieure, et qui assurent la transmission des efforts depuis l'ensemble supérieur à destination des carres **41.** Dans d'autres variantes de structures de planche de glisse **25,** non représentées, la structure pourrait ne pas comporter de chants latéraux, et être de type « coque » par exemple, ou encore pourrait comporter plusieurs couches de renfort, ou encore pourrait ne pas comporter de carres.

Dans le premier mode de réalisation de la figure 14, les éléments piézoélectriques **11a-11b** sont fixés directement sur la couche de décoration et de protection **43.** De préférence, les éléments piézoélectriques **11a-11b** sont fixés par collage sur la couche de décoration et de protection **43** ou sur la couche de support. Pour ce faire, il est préférable d'utiliser une colle rigide dont la résistance au cisaillement est importante, par exemple une colle époxy, ceci pour ne pas modifier et atténuer les valeurs réelles de déformations de la planche de glisse **25.** Toutefois, un élément adhésif de type double face, d'épaisseur très mince, créant peu de cisaillement à l'intérieur de cette couche, peut être envisagé.

Dans une variante de ce mode de réalisation, une couche de support rigide peut être fixée sur la couche de décoration et de protection **43** pour supporter les éléments piézoélectriques **11a-11b.** Par exemple, une couche de support en aluminium peut être utilisée.

Dans le second mode de réalisation de la figure 15, les éléments piézoélectriques **11a-11b** sont fixés sur la couche de renfort **44.** Pour ce faire, la couche de décoration et de protection **43** est évidée au niveau de la surface **12** de fixation des éléments piézoélectriques **11a-11b,** les éléments piézoélectriques étant disposés alors dans cet évidement.

Comme dans le premier mode de réalisation de la figure 12, une fixation par collage des éléments piézoélectriques **11a-11b** peut être réalisée, soit pendant le moulage de la planche de glisse, soit après le moulage de la planche de glisse.

L'invention nécessite également le positionnement du circuit électronique **15** sur la planche de glisse **25.** Aussi, un support **32** est rapporté sur la planche de glisse **25** pour supporter le circuit électronique de traitement **15,** tel qu'illustré à la figure 11.

De préférence, ce support **32** est amovible de sorte à pouvoir effectuer une maintenance sur le circuit électronique de traitement **15** en désolidarisant le circuit électronique de traitement **15** de la planche de glisse **25.** Ce support **32** peut être lié par clipsage ou vissage avec la planche de glisse **25** ou le rail de montage **30** de la butée de la fixation. Par exemple, le support **32** peut comporter des ergots destinés à coopérer avec des alésages réalisés dans la partie avant du rail de montage **30.**

Ce support **32** définit également la position du circuit électronique de traitement **15** sur la planche de glisse **25.**

Dans l'exemple des figures 7 à 13, le circuit électronique de traitement **15** est disposé à l'avant du rail de montage avant **30** de la butée de la fixation et au-dessus des éléments piézoélectriques **11a-11b.** En variante, le circuit électronique **15** peut être disposé sur les éléments piézoélectriques **11a-11b** sans lien avec le rail de montage **30** ou la butée avant de la fixation, en étant fixé à la planche de glisse.

Par ailleurs, tel qu'illustré sur la figure 11, le circuit électronique de traitement **15** peut être vissé sur le support **32,** ou clipsé ou encore collé. Le circuit électronique de traitement **15** est ensuite connecté électriquement avec les éléments piézoélectriques **11a-11b** au moyen de fils ou d'une connectique adaptée.

Tel qu'illustré sur la figure 12, un capot de protection **33** est monté sur le support **32** de sorte à protéger le circuit électronique de traitement **15** et les éléments piézoélectriques **11a-11b.** Le capot de protection **33** peut également être fixé par vissage ou par collage par exemple avec le support **32.**

Aussi, l'ensemble formé par le support **32** et le capot de protection **33** forme un boitier recevant le circuit électronique de traitement **15** et ce boitier est de préférence étanche pour protéger les composants électroniques de la neige ou de l'eau, ce boitier étant facilement démontable de la planche de glisse.

Ce capot de protection **33** présente préférentiellement une forme aérodynamique pour limiter la prise au vent de la planche de glisse **25** et limiter le risque de choc sur le circuit électronique de traitement **15** ou les éléments piézoélectriques **11a-11b.**

Dans l'exemple illustré, le capteur **100** est composé d'un boitier contenant les éléments électroniques de traitement rapportés sur la planche de glisse et d'éléments piézoélectriques indépendants du boitier lié à la planche de glisse, connectés à l'électronique.

Dans une autre réalisation non illustrée, le capteur **100** pourrait être composé d'un seul boitier qui contiendrait les éléments électroniques de traitement et qui présenterait sous sa surface inférieure une couche incluant les éléments piézoélectriques, connectés à l'électronique. Cet ensemble serait alors solidarisé à l'une des surfaces de la planche de glisse.

Dans le cas d'une planche de glisse **25** qui est un ski de fond, la localisation des éléments piézoélectriques et du boitier électronique de traitement peut être similaire à celle proposée pour le ski alpin, ou il peut être avantageux de positionner les éléments piézoélectriques plus en avant de la butée avant de la fixation de quelques centimètres, voire de quelques dizaines de centimètres pour obtenir plus d'amplitude de déformations. Ce capteur **100** sera tout à fait utilisable dans le cas d'un ski de fond du fait de son très faible poids, de l'ordre de 10 à 50g, apporté par les composants du capteur **100.**

Dans le cas d'une planche de glisse **25** qui est un snowboard supportant alors les deux pieds de l'utilisateur, la planche de glisse **25** serait munie de deux fixations distinctes. Les éléments piézoélectriques ainsi que le boitier électronique de traitement pourraient être positionnés sur le côté latéral de l'une ou de l'autre des fixations, du côté des extrémités de la planche, ou pourraient être positionnés entre les deux fixations, dans une zone relativement protégée.

Cette invention associant éléments piézoélectriques **11a-11b** et circuit électronique de traitement **15** présente l'avantage de stocker les données **T,** représentant le temps réel d'utilisation de la planche de glisse **25,** et **M** représentant l'intensité de l'utilisation de la planche de glisse **25,** ces données étant issues de la planche de glisse **25** lors des sollicitations de la planche de glisse **25.**

La mise en route de l'analyse est automatique dès que la planche de glisse **25** est en mouvement et l'utilisateur n'a pas à se soucier ni de la mise en route du système, ni de son alimentation, ni du rechargement électrique du système, étant donné que le circuit électronique de traitement **15** est autonome car alimenté directement par les capteurs piézoélectriques **11a-11b.** L'utilisateur peut ensuite accéder aux données **T, M** enregistrées dans la mémoire **19** embarquée sur la planche de glisse **25,** ceci ultérieurement, lorsque la planche de glisse **25** n'est plus utilisée.

Ainsi, l'invention présente l'utilisation d'au moins un élément piézoélectrique **11a-11b:**
- qui est à la fois générateur d'énergie électrique pour le circuit électronique de traitement **15,**
- et qui est également un capteur de mesure des déformations de la planche de glisse dans le sens où la tension **Vpa, Vpb** délivrée par l'au moins un élément piézoélectrique **11a-11b** est utilisée par le circuit électronique de traitement **15** qui est configuré pour estimer des valeurs représentatives de l'utilisation de la planche de glisse, telles qu'une durée d'utilisation et/ou un niveau d'amplitude des déformations de la planche de glisse à partir de la tension **Vpa, Vpb** délivrée.

L'invention permet, ainsi, d'analyser les performances d'un utilisateur d'une planche de glisse en obtenant une information liée à l'utilisation d'une planche de glisse tout en s'affranchissant d'une source supplémentaire d'alimentation, et en particulier d'une batterie électrochimique.

L'invention permet d'analyser les performances d'un utilisateur par rapport à des performances de référence en vue d'établir son niveau de ski, et de lui conseiller des exercices adaptés à son niveau, des cours de ski adaptés à son niveau, des skis adaptés à son niveau.

## Revendications

1. Système d'analyse (200) des performances d'utilisation d'une planche de glisse (25) comportant :
- une base de données (202) stockant des performances de référence ;
- un capteur (100) sensible aux déformations de ladite planche de glisse (25) ; et
- un organe de supervision (204) comportant :
- des moyens de détermination des performances d'utilisation de ladite planche de glisse (25) en fonction de mesures dudit capteur (100) ; et
- des moyens de comparaison desdites performances d'utilisation avec lesdites performances de référence ; ledit capteur (100) étant solidarisé à ladite planche de glisse (25) et comportant :
- au moins un élément piézoélectrique (11a-11b) solidarisé à ladite planche de glisse (25) et configuré pour générer une énergie électrique lors des déformations de ladite planche de glisse (25) ; et un circuit électronique de traitement (15), alimenté exclusivement par ladite énergie électrique générée par ledit au moins un élément piézoélectrique (11a-11b), configuré pour estimer une durée (T) des phases de déformations de ladite planche de glisse (25) et pour estimer une image (M) de l'énergie mécanique dissipée pendant les déformations de ladite planche de glisse (25) ; lesdites performances d'utilisation incluant un temps de sollicitations (Ts), correspondant à ladite durée (T) des phases de déformations de ladite planche de glisse (25), et une image de la puissance moyenne de sollicitations (Ps) correspondant au rapport entre l'image (M) par ladite durée (T) des phases de déformations ;
lesdites performances de référence étant déterminées par un capteur (100), analogue audit capteur (100) solidarisé à ladite planche de glisse (25), de sorte à obtenir un temps de sollicitations de référence (Tref) et une moyenne de sollicitations de référence (Pref),
**caractérisé en ce que** ledit au moins un élément piézoélectrique (11a-11b) assure à la fois le rôle de source d'information pour la détermination des performances d'utilisation de la planche de glisse (25) et le rôle de source d'alimentation pour un circuit électronique de traitement (15).

2. Système d'analyse selon la revendication 1, ***dans lequel*** lesdites performances d'utilisation incluent une vitesse (Vs) mesurée par un capteur de position (207) ; cette vitesse mesurée (Vs) étant comparée à une vitesse de référence (Vref).

3. Système d'analyse selon la revendication 1 ou 2, ***dans lequel*** lesdites performances d'utilisation incluent un nombre de virages effectués (Ns) détectés par un gyroscope (208) ; ce nombre de virages effectués (Ns) étant comparé à un nombre de virages effectués de référence (Nref).

4. Système d'analyse selon l'une des revendications 1 à 3, ***dans lequel*** lesdits moyens de détermination des performances d'utilisation sont configurés pour déterminer des performances d'utilisation corrigées (Tsc, Psc, Vsc, Nsc) en fonction desdites performances d'utilisation (Ts, Ps, Vs, Ns) et d'une variable (αm) relative à une raideur en flexion de ladite planche de glisse (25) ; lesdits moyens de comparaison étant mis en œuvre à partir desdites performances d'utilisation corrigées (Tsc, Psc, Vsc, Nsc).

5. Système d'analyse selon la revendication 4, ***dans lequel*** ladite variable (αm) relative à une raideur en flexion de ladite planche de glisse (25), est obtenue à partir du modèle de ladite planche de glisse (25) et d'une base de données (220) stockant différents modèles de planches de glisse et des coefficients de raideur en flexion correspondants.

6. Système d'analyse selon l'une des revendications 1 à 5, ***dans lequel*** lesdits moyens de détermination des performances d'utilisation sont configurés pour déterminer des performances d'utilisation corrigées (Tsc, Psc, Vsc, Nsc) en fonction desdites performances d'utilisation (Ts, Ps, Vs, Ns) et d'une variable (αn) relative au type de neige sur laquelle évolue ladite planche de glisse (25) ; lesdits moyens de comparaison étant mis en œuvre à partir desdites performances d'utilisation corrigées (Tsc, Psc, Vsc, Nsc).

7. Système d'analyse selon la revendication 6, ***dans lequel*** ladite variable (αn) relative au type de neige sur laquelle évolue ladite planche de glisse (25), est obtenu à partir d'un capteur de température (209).

8. Système d'analyse selon la revendication 6, ***dans lequel*** ladite variable (αn) relative au type de neige sur laquelle évolue ladite planche de glisse (25), est obtenu à partir d'un capteur de position (207) et d'une base de données (222) stockant des informations météorologiques relatives à différentes positions.

9. Système d'analyse selon l'une des revendications 1 à 8, ***dans lequel*** ledit organe de supervision (204) est configuré pour autoriser l'accès à un parcours de niveau supérieur lorsque ledit temps de sollicitations (Ts) est inférieur à un temps de sollicitations de référence (Tref) et que ladite puissance moyenne de sollicitations (Ps) est supérieure à une puissance moyenne de sollicitations de référence (Pref).

10. Système d'analyse selon les revendications 2, 3 et 9, ***dans lequel*** ledit organe de supervision (204) est configuré pour autoriser l'accès à un parcours de niveau supérieur lorsque ladite vitesse (Vs) et ledit nombre de virages effectués (Ns) sont supérieurs à ladite vitesse de référence (Vref) et audit nombre de virages effectués de référence (Nref).

11. Système d'analyse selon l'une des revendications 1 à 10, ***dans lequel*** ledit organe de supervision (204) est configuré pour classer un utilisateur d'une planche de glisse (25) par rapport à des classes de niveau prédéfinies en fonction de ladite comparaison réalisée par ledit organe de supervision (204).

12. Système d'analyse selon l'une des revendications 1 à 11, ***dans lequel*** ledit organe de supervision (204) est intégré dans une application mobile d'un téléphone intelligent (203).

## Patentansprüche

1. Analysesystem zur Analyse (200) der Nutzungsleistung eines Gleitbretts (25), umfassend:
- eine Datenbank (202), in der Referenzleistung gespeichert ist;
- einen Sensor (100), der auf Verformungen des Gleitbretts (25) reagiert; und
- ein Überwachungselement (204), umfassend:
- Mittel zum Bestimmen der Nutzungsleistung des Gleitbretts (25) basierend auf Messungen des Sensors (100); und
- Mittel zum Vergleichen der Nutzungsleistung mit der Referenzleistung; wobei der Sensor (100) am Gleitbrett (25) befestigt ist und Folgendes umfasst:
- mindestens ein piezoelektrisches Element (11a-11b), das am Gleitbrett (25) befestigt ist und dazu konfiguriert ist, bei Verformungen des Gleitbretts (25) elektrische Energie zu erzeugen; und
- eine elektronische Verarbeitungsschaltung (15), die ausschließlich durch die von dem mindestens einen piezoelektrischen Element (11a-11b) erzeugte elektrische Energie gespeist wird und dazu konfiguriert ist, eine Dauer (T) der Verformungsphasen des Gleitbretts (25) abzuschätzen und ein Bild (M) der während der Verformungen des Gleitbretts (25) abgeführten mechanischen Energie abzuschätzen;
wobei die Nutzungsleistung eine Belastungszeit (Ts) entsprechend der Dauer (T) der Verformungsphasen des Gleitbretts (25) und ein Bild der durchschnittlichen Belastungsleistung (Ps) entsprechend dem Verhältnis zwischen dem Bild (M) und der Dauer (T) der Verformungsphasen umfasst;
wobei die Referenzleistung durch einen Sensor (100) bestimmt wird, der analog zu dem am Gleitbrett (25) befestigten Sensor (100) ist, um eine Referenzbelastungszeit (Tref) und einen Referenzbelastungsdurchschnitt (Pref) zu erhalten,
**dadurch gekennzeichnet, dass** das mindestens eine piezoelektrische Element (11a-11b) sowohl die Funktion einer Informationsquelle zum Bestimmen der Nutzungsleistung des Gleitbretts (25) als auch die Funktion einer Stromquelle für eine elektronische Verarbeitungsschaltung (15) erfüllt.

2. Analysesystem nach Anspruch 1, wobei die Nutzungsleistung eine von einem Positionssensor (207) gemessene Geschwindigkeit (Vs) umfasst, wobei diese gemessene Geschwindigkeit (Vs) mit einer Referenzgeschwindigkeit (Vref) verglichen wird.

3. Analysesystem nach Anspruch 1 oder 2, wobei die Nutzungsleistung eine Anzahl an durchgeführten Schwüngen (Ns) umfasst, die von einem Gyroskop (208) erfasst werden, wobei diese Anzahl an durchgeführten Schwüngen (Ns) mit einer Referenzanzahl an durchgeführten Schwüngen (Nref) verglichen wird.

4. Analysesystem nach einem der Ansprüche 1 bis 3, wobei die Mittel zum Bestimmen der Nutzungsleistung dazu konfiguriert sind, eine korrigierte Nutzungsleistung (Tsc, Psc, Vsc, Nsc) basierend auf der Nutzungsleistung (Ts, Ps, Vs, Ns) und einer Variablen (αm) bezüglich einer Biegesteifigkeit des Gleitbretts (25) zu bestimmen, wobei die Mittel zum Vergleichen auf der Grundlage dieser korrigierten Nutzungsleistung (Tsc, Psc, Vsc, Nsc) eingesetzt werden.

5. Analysesystem nach Anspruch 4, wobei die Variable (αm) bezüglich einer Biegesteifigkeit des Gleitbretts (25) ausgehend von dem Modell des Gleitbretts (25) und einer Datenbank (220) erhalten wird, in der verschiedene Modelle von Gleitbrettern und entsprechende Biegesteifigkeitskoeffizienten gespeichert sind.

6. Analysesystem nach einem der Ansprüche 1 bis 5, wobei die Mittel zum Bestimmen der Nutzungsleistung dazu konfiguriert sind, eine korrigierte Nutzungsleistung (Tsc, Psc, Vsc, Nsc) basierend auf der Nutzungsleistung (Ts, Ps, Vs, Ns) und einer Variablen (αn) bezüglich des Schneetyps, auf dem sich das Gleitbrett (25) bewegt, zu bestimmen, wobei die Mittel zum Vergleichen auf der Grundlage dieser korrigierten Nutzungsleistung (Tsc, Psc, Vsc, Nsc) eingesetzt werden.

7. Analysesystem nach Anspruch 6, wobei die Variable (αn) bezüglich des Schneetyps, auf dem sich das Gleitbrett (25) bewegt, durch einen Temperatursensor (209) erhalten wird.

8. Analysesystem nach Anspruch 6, wobei die Variable (αn) bezüglich des Schneetyps, auf dem sich das Gleitbrett (25) bewegt, durch einen Positionssensor (207) und eine Datenbank (222) erhalten wird, in der Wetterinformationen zu verschiedenen Positionen gespeichert sind.

9. Analysesystem nach einem der Ansprüche 1 bis 8, wobei das Überwachungselement (204) dazu konfiguriert ist, den Zugang zu einer Strecke eines höheren Niveaus zu gestatten, wenn die Belastungszeit (Ts) kürzer als eine Referenzbelastungszeit (Tref) ist und die durchschnittliche Belastungsleistung (Ps) größer als eine durchschnittliche Referenzbelastungsleistung (Pref) ist.

10. Analysesystem nach den Ansprüchen 2, 3 und 9, wobei das Überwachungselement (204) dazu konfiguriert ist, den Zugang zu einer Strecke eines höheren Niveaus zu gestatten, wenn die Geschwindigkeit (Vs) und die Anzahl an durchgeführten Schwüngen (Ns) größer als die Referenzgeschwindigkeit (Vref) und die Referenzanzahl an durchgeführten Schwüngen (Nref) sind.

11. Analysesystem nach einem der Ansprüche 1 bis 10, wobei das Überwachungselement (204) dazu konfiguriert ist, einen Benutzer eines Gleitbretts (25) basierend auf dem vom Überwachungselement (204) durchgeführten Vergleich in Bezug auf vordefinierte Niveauklassen einzustufen.

12. Analysesystem nach einem der Ansprüche 1 bis 11, wobei das Überwachungselement (204) in eine mobile Anwendung eines Smartphones (203) integriert ist.

## Claims

1. A system for analysis (200) of the performance in use of a sliding board (25) comprising:
- a database (202) storing baseline performance;
- a sensor (100) sensitive to the deformations of said sliding board (25); and
- a monitoring body (204) comprising:
- means for determining the performance in use of said sliding board (25) based on measurements from said sensor (100); and
- means for comparing said performance in use with said baseline performance;
said sensor (100) being secured to said sliding board (25) and comprising:
- at least one piezoelectric element (11a-11b) secured to said sliding board (25) and configured to generate electric energy during the deformations of said sliding board (25); and
- an electronic processing circuit (15), powered exclusively by said electric energy generated by said at least one piezoelectric element (11a-11b), configured to estimate a duration (T) of the phases of deformations of said sliding board (25) and to estimate an image (M) of the mechanical energy dissipated during the deformations of said sliding board (25);
said performance in use including a stressing time (Ts), corresponding to said duration (T) of the phases of deformation of said sliding board (25), and an image of the mean stressing power (Ps) corresponding to the relationship between the image (M) and said duration (T) of the deformation phases;
said baseline performance being determined by a sensor (100), analogous to said sensor (100) secured to said sliding board (25), so as to obtain a baseline stressing time (Tref) and a baseline stressing mean (Pref), **characterized in that** said at least one piezoelectric element (11a-11b) is ensuring both the role of information source for determining the performance of the sliding board (25) and the role of power source for an electronic processing circuit (15).

2. The analysis system according to claim 1, ***wherein*** said performance in use includes a speed (Vs) measured by a position sensor (207); this measured speed (Vs) being compared to a baseline speed (Vref).

3. The analysis system according to claim 1 or 2, ***wherein*** said performance in use includes a number of turns made (Ns) detected by a gyroscope (208); this number of turns made (Ns) being compared to a baseline number of turns made (Nref).

4. The analysis system according to one of claims 1 to 3, ***wherein*** said means for determining the performance in use are configured to determine corrected performance in use (Tsc, Psc, Vsc, Nsc) based on said performance in use (Ts, Ps, Vs, Ns) and on a variable (αm) related to a flexural rigidity of said sliding board (25); said means for comparing being implemented from said corrected performance in use (Tsc, Psc, Vsc, Nsc).

5. The analysis system according to claim 4, ***wherein*** said variable (αm) related to a flexural rigidity of said sliding board (25) is obtained from the model of said sliding board (25) and from a database (220) storing different models of sliding boards and corresponding flexural rigidity coefficients.

6. The analysis system according to one of claims 1 to 5, ***wherein*** said means for determining the performance in use are configured to determine corrected performance in use (Tsc, Psc, Vsc, Nsc) based on said performance in use (Ts, Ps, Vs, Ns) and on a variable (αm) related to the type of snow over which said sliding board (25) is progressing; said means for comparing being implemented from said corrected performance in use (Tsc, Psc, Vsc, Nsc).

7. The analysis system according to claim 6, ***wherein*** said variable (αn) related to the type of snow over which said sliding board (25) is progressing is obtained from a temperature sensor (209).

8. The analysis system according to claim 6, ***wherein*** said variable (αn) related to the type of snow over which said sliding board (25) is progressing is obtained from a position sensor (207) and from a database (222) storing weather information related to different positions.

9. The analysis system according to one of claims 1 to 8, ***wherein*** said monitoring body (204) is configured to authorize access to a high-level route when said stressing time (Ts) is less than a baseline stressing time (Tref) and when said mean stressing power (Ps) is greater than a baseline mean stressing power (Pref).

10. The analysis system according to claims 2, 3 and 9, ***wherein*** said monitoring body (204) is configured to authorize access to a high-level route when said speed (Vs) and said number of turns made (Ns) are greater than said baseline speed (Vref) and than said baseline number of turns made (Nref).

11. The analysis system according to one of claims 1 to 10, ***wherein*** said monitoring body (204) is configured to classify a user of a sliding board (25) in relation to classifications of predefined levels based on said comparison carried out by said monitoring body (204).

12. The analysis system according to one of claims 1 to 11, ***wherein*** said monitoring body (204) is integrated into a mobile application of a smartphone (203).
